# EUROPÄISCHE PATENTSCHRIFT

(11) **EP 2 022 601 B1**
(45) Veröffentlichungstag und Bekanntmachung des Hinweises auf die Patenterteilung: **20.03.2013**
(21) Anmeldenummer: 07015250.9
(22) Anmeldetag: 03.08.2007
(51) Int. Cl.: B23P 23/00, B23K 26/38, B23K 28/02

(54) **Laserbearbeitungsmaschine zum Bearbeiten von Werkstücken sowie maschinelles Verfahren zum Bearbeiten von Werkstücken mittels eines Laserstrahls**
Laser processing machine for machining workpieces and machine method for machining workpieces using a laser beam
Machine de traitement laser destinée au traitement de pièces à usiner tout comme procédé mécanique destiné au fonctionnement de pièces à usiner à l'aide d'un faisceau laser

(43) Veröffentlichungstag der Anmeldung: 11.02.2009
(73) Patentinhaber: TRUMPF Werkzeugmaschinen GmbH + Co. KG, 71254 Ditzingen (DE)
(72) Erfinder: Schmauder, Frank, 72555 Metzingen (DE); Bunz, Andreas, 73257 Köngen (DE)
(74) Vertreter: Kohler Schmid Möbus

(56) Entgegenhaltungen:
- JP-A- 10 217 050
- JP-A- 2000 237 891
- US-A- 4 698 480
- US-A- 4 950 861

## Beschreibung

Die Erfindung betrifft eine Laserbearbeitungsmaschine zum Bearbeiten von Werkstücken, insbesondere von Blechen, unter Durchdringen eines zu bearbeitenden Werkstückes mittels eines Laserstrahls,
- mit einer Werkstückauflage zum Lagern eines Werkstückes,
- mit einem Laserbearbeitungskopf und einer mit einer Aufnahmeöffnung versehenen Strahlaufnahme für den Laserstrahl sowie
- mit einer Stelleinrichtung,
wobei der Laserbearbeitungskopf auf der einen und die Werkstückauflage sowie die Strahlaufnahme auf der gegenüberliegenden Seite des Werkstückes angeordnet sind und der Laserstrahl von dem Laserbearbeitungskopf her nach Durchdringen des Werkstückes in die Aufnahmeöffnung der Strahlaufnahme eintaucht und wobei mittels der Stelleinrichtung der entlang der Strahlachse des in die Strahlaufnahme eintauchenden Laserstrahls bestehende Abstand zwischen dem Werkstück und der Strahlaufnahme variierbar ist, indem die Werkstückauflage und die Strahlaufnahme mittels eines von einer Antriebssteuerung ansteüerbaren Stellantriebes der Stelleinrichtung mit einer Stellbewegung entlang der Strahlachse des Laserstrahls relativ zueinander zustellbar sind. Die Erfindung betrifft des Weiteren ein maschinelles Verfahren zum Bearbeiten von Werkstücken, welches mittels einer Laserbearbeitungsmaschine der genannten Art durchgeführt werden kann. Schließlich betrifft die Erfindung ein entsprechendes Bearbeitungsprogramm zum Betreiben einer Laserbearbeitungsmaschine, ein Verfahren zum Erstellen eines derartigen Bearbeitungsprogramms sowie ein Computerprogrammprodukt mit Kodierungsmitteln, welche die Durchführung des genannten Verfahrens zum Erstellen eines Bearbeitungsprogramms erlauben.

Eine gattungsgemäße Laser-Bearbeitungsmaschine sowie ein maschinelles Verfahren der vorstehenden Art sind bekannt aus JP 10-217 050 A. Im Falle des Standes der Technik umfasst eine Laserbearbeitungsmaschine für die Blechbearbeitung einen oberhalb der zu bearbeitenden Bleche angeordneten Laserbearbeitungskopf sowie eine an der Blechunterseite vorgesehene Strahlaufnahme für den von dem Laserbearbeitungskopf auf die zu bearbeitenden Werkstücke gerichteten Laserstrahl. Nach dem Durchdringen des betreffenden Bleches taucht der Laserstrahl in die Strahlauf-nahme ein. Außerdem werden über die Strahlaufnahme insbesondere Dämpfe und Schlacke, die an der Bearbeitungsstelle des Laserstrahles entstehen, abgesaugt. Schließlich kann eine Strahlaufnahme der beschriebenen Art auch dazu dienen, mittels des Laserstrahls erstellte Blechausschnitte aus dem Bearbeitungsbereich der Laserbearbeitungsmaschine auszuschleusen. Eine mit einem Bürstenfeld zur Werkstücklagerung versehene Werkstückauflage der vorbekannten Laserbearbeitungsmaschine ist mit einer Aussparung für die Strahlaufnahme versehen. Dabei reicht das Bürstenfeld bis unmittelbar an den Rand der Aussparung für die Strahlaufnahme. Bei der Bearbeitung von ebenen Blechen nimmt die Strahlaufnahme entlang der Strahlachse des Laserstrahls eine obere Endstellung ein. Dabei ragt die Strahlaufnahme durch die Aussparung an der Werkstückauflage hindurch. An ihrer Oberseite fluchtet die in der oberen Endstellung befindliche Strahlaufnahme mit den freien Enden der Borsten des Bürstenfeldes der Werkstückauflage. Dementsprechend ruhen die zu bearbeitenden Bleche sowohl auf dem Bürstenfeld der Werkstückauflage als auch auf der Oberseite der Strahlaufnahme. Zur Ausführung der gewünschten Bearbeitung, beispielsweise zum Erstellen von Ausschnitten, wird das Blech senkrecht zu dem Laserstrahl über das Bürstenfeld sowie die Strahlaufnahme hinweg bewegt. Ist ein zu bearbeitendes Blech mit einer Umformung versehen, die gegenüber der Hauptebene des Bleches nach unten vorsteht, so würde diese Umformung bei der Bewegung des Bleches über die Werkstückauflage mit der in die obere Endstellung bewegten Strahlaufnahme kollidieren. Zur Vermeidung derartiger Kollisionen wird die Strahlaufnahme der vorbekannten Laserbearbeitungsmaschine mittels einer Stelleinrichtung in eine untere Endstellung abgesenkt, sobald sich eine an der Blechunterseite vorstehende Umformung der in der oberen Endstellung befindlichen Strahlaufnahme nähert. Ausgelöst wird die Absenkbewegung der Strahlaufnahme mit Hilfe von Detektoren, die an der Werkstückauflage nahe der Aussparung für die Strahlaufnahme vorgesehen sind und die bei der Blechbewegung über die Werkstückauflage von den nach unten überstehenden Umformungen des zu bearbeitenden Bleches angefahren werden. In der unteren Endstellung liegt die Strahlaufnahme unterhalb der Werkstückauflage, so dass an der Blechunterseite vorstehende Umformungen kollisionsfrei über die Strahlaufnahme hinwegbewegt werden können. Für den Schneidbetrieb ist an der vorbekannten Laserbearbeitungsmaschine mit der beschriebenen oberen Endstellung lediglich eine einzige Stellung der Strahlaufnahme vorgesehen.

Eine Optimierung der Werkstückbearbeitung hat sich die vorliegende Erfindung ausgehend von dem vorstehenden Stand der Technik zum Ziel gesetzt.

Erfindungsgemäß gelöst wird diese Aufgabe durch die Gegenstände der unabhängigen Patentansprüche 1, 19, 28, 29 und 30.

Im Falle der Erfindung kann der Abstand, der entlang der Strahlachse des Laserstrahls zwischen der Werkstückauflage und der Strahlaufnahme besteht, im Rahmen der konstruktiv vorgegebenen Grenzen auf jeden beliebigen Abstandswert eingestellt werden. Folglich lässt sich der Abstand zwischen einem zu bearbeitenden bzw. einem bearbeiteten Werkstück und der Strahlaufnahme mit größtmöglicher Flexibilität regeln. Der Abstand zwischen dem Werkstück und der Strahlaufnahme kann optimal auf die jeweiligen Bedürfnisse abgestimmt werden. Die Durchführung des erfin-dungsgemäßen Verfahrens erfolgt programmgesteuert. Zum Erstellen des Steuerungsprogramms dient ein hierfür vorgesehenes Verfahren, das auf einer Datenverarbeitungsanlage mittels eines Computerprogrammproduktes durchgeführt werden kann.

Besondere Ausführungsarten der Erfindung gemäß den unabhängigen Patentansprüchen ergeben sich aus den abhängigen Patentansprüchen 2 bis 18 und 20 bis 27.

In bevorzugter Ausgestaltung der Erfindung werden die Werkstückauflage und die Strahlaufnahme mittels des Stellantriebes der Stelleinrichtung relativ zueinander derart eingestellt, dass unterschiedlichen Bearbeitungsphasen der Werkstückbearbeitung unterschiedlich große Abstände zwischen dem Werkstück und der Strahlaufnahme zugeordnet sind (Patentansprüche 2, 20). In unterschiedlichen Phasen der Werkstückbearbeitung können unterschiedliche Abstände zwischen dem Werkstück und der Strahlaufnahme zweckmäßig sein. Wird etwa ein Werkstück mit einer verhältnismäßig schnellen Positionierbewegung relativ zu der Strahlaufnahme bewegt, so ist es sinnvoll, den Abstand zwischen dem Werkstück und der Strahlaufnahme auf einen verhältnismäßig großen Abstandswert einzustellen (Patentanspruch 3). Weist die Werkstückauflage beispielsweise Bürstenfelder zur Werkstücklagerung auf, so ist damit zu rechnen, dass sich die Bürsten der Bürstenfelder bei einer schnellen Positionierbewegung des Werkstückes nennenswert biegen und sich das Blech folglich in Richtung auf die Strahlaufnahme bewegt. Dessen ungeachtet wird bei einem entsprechend großen Abstand zwischen dem Werkstück und der Strahlaufnahme verhindert, dass das Werkstück bei seiner Positionierbewegung mit der Strahlaufnahme in Kontakt kommt und beispielsweise durch Kratzerbildung beschädigt wird.

Bewegungen, welche ein Werkstück und die Strahlaufnahme bei der Laserbearbeitung des Werkstückes relativ zueinander ausführen, sind in der Regel wesentlich langsamer als Positionierbewegungen der vorstehend beschriebenen Art. Etwa beim Einsatz von Werkstückauflagen mit Bürstenfeldern stellt sich folglich aufgrund der Bearbeitungsbewegung von Werkstücken eine allenfalls geringe Biegung der Bürsten der Werkstückauflage und damit verbunden nur eine allenfalls geringfügige Annäherung des Werkstückes an die Strahlaufnahme ein. Unter diesen Umständen kann durch eine entsprechende gegenseitige Zustellung von Werkstückauflage und Strahlaufnahme der Abstand zwischen einem Werkstück und der Strahlaufnahme für die Bearbeitungsbewegung auf einen kleineren Abstandswert eingestellt werden als bei der schnellen Positionierbewegung von Werkstücken (Patentansprüche 4, 5). Ein kleiner Abstandswert ist ausreichend, um bei der Bearbeitungsbewegung einen Kontakt zwischen Werkstück und Strahlaufnahme sowie eine damit verbundene Werkstückbeschädigung zu vermeiden.

Im Interesse optimaler Verhältnisse bei der Laserbearbeitung von Werkstücken ist es grundsätzlich empfehlenswert, für den Abstand zwischen dem Werkstück und der Strahlaufnahme den jeweils möglichen Minimalwert zu wählen. Bei minimalem Abstand von dem Werkstück kann die Strahlaufnahme die ihr zugedachten Funktionen optimal erfüllen. Insbesondere kann die Strahlaufnahme bei minimalem Abstand von dem Werkstück eine maximale Absaugwirkung entfalten und an der Bearbeitungsstelle des Laserstrahls entstehende Dämpfe und Schlacke besonders funktionssicher abführen. Weiterhin kann die Strahlaufnahme bei minimalem Abstand von dem Werkstück auch seitlichen, von der Bearbeitungsstelle des Laserstrahls ausgehenden Funkenflug wirksam unterbinden. Derartiger Funkenflug könnte zu Schäden an Einrichtungen nahe der Bearbeitungsstelle, beispielsweise zum Entzünden von Bürsten der Werkstückauflage, führen.

An sich wünschenswert ist der Abstandswert Null für den Abstand zwischen Werkstück und Strahlaufnahme. Eine entsprechende gegenseitige Zustellung der Werkstückauflage und der Strahlaufnahme ist allerdings bei Positionierbewegungen und bei Bearbeitungsbewegungen eines Werkstückes angesichts der damit verbundenen Gefahr von Beschädigungen des Werkstückes weniger empfehlenswert. Sie ist in weiterer bevorzugter Ausgestaltung der Erfindung aber für Fälle ohne Relativbewegung von Werkstück und Strahlaufnahme vorgesehen (Patentanspruch 6). Bei der Werkstückbearbeitung unterbleibt eine Relativbewegung von Werkstück und Strahlaufnahme beispielsweise dann, wenn eine zur Werkstückbearbeitung erforderliche Relativbewegung von Laserbearbeitungskopf und Werkstück ausschließlich durch Bewegen des Laserbearbeitungskopfes erzeugt wird. Eine alleinige Bewegung des Laserbearbeitungskopfes kann etwa beim abschließenden Trennschnitt zum Erstellen von Ausschnitten an einem Blech ausgeführt werden.

In weiterer Ausgestaltung der Erfindung werden als Parameter für die Bemessung des Abstandes zwischen dem Werkstück und der Strahlaufnahme und damit für die gegenseitige Zustellung der Werkstückauflage und der Strahlaufnahme der Werkstoff sowie - vorzugsweise im Falle der Blechbearbeitung - die Werkstückdicke berücksichtigt (Patentansprüche 7, 8, 21, 22). Der Werkstoff von zu bearbeitenden Werkstücken ist u. a. insofern relevant, als das Ausmaß der Funkenbildung an der Bearbeitungsstelle des Laserstrahls sowie die Eigensteifigkeit und damit der Umfang der Durchbiegung des Werkstückes über der Strahlaufnahme auch werkstoffabhängig sind. Insbesondere für die Eigensteifigkeit und folglich für den Grad der Durchbiegung von Blechen über der Strahlaufnahme ist die Werkstück- bzw. Blechdicke mitbestimmend.

Eine weitere bevorzugte Ausführungsform der Erfindung zeichnet sich dadurch aus, dass der Abstand zwischen dem Werkstück und der Strahlaufnahme durch entsprechendes gegenseitiges Zustellen der Werkstückauflage und der Strahlaufnahme für die Dauer zumindest einer Bearbeitungsphase der Werkstückbearbeitung konstant gehalten werden kann (Patentansprüche 9, 23). Die zu diesem Zweck vorgesehene Antriebssteuerung für den Stellantrieb der Stelleinrichtung sorgt im Interesse optimaler Abläufe und Bearbeitungsergebnisse für einen einheitlichen Abstand zwischen Werkstück und Strahlaufnahme. Beispielsweise eine zu Beginn einer Bearbeitungsphase vorgenommene gegenseitige Einstellung der Werkstückauflage und der Strahlaufnahme kann während der sich anschließenden Werkstückbearbeitung bei Bedarf durch entsprechende Ansteuerung des Stellantriebes der Stelleinrichtung derart verändert werden, dass der Abstand zwischen dem Werkstück und der Strahlaufnahme während der gesamten Bearbeitungsphase gleich bleibt. Voraussetzung für eine Abstandsregelung der beschriebenen Art ist eine fortlaufende Überwachung bzw. Ermittlung des Abstandes zwischen dem Werkstück und der Strahlaufnahme. Auf Abstandsänderungen etwa infolge von Blechunebenheiten wird von der Antriebssteuerung durch Ansteuerung des Stellantriebes im Sinne einer Beibehaltung bzw. Wiederherstellung des konstant einzuhaltenden Abstandes reagiert.

Erfindungsgemäß bevorzugt wird eine Antriebssteuerung des Stellantriebes zur Einstellung des gegenseitigen Abstandes zwischen dem Werkstück und der Strahlaufnahme, die wenigstens teilweise von einer Antriebssteuerung eines Stellantriebes zur Einstellung des gegenseitigen Abstandes zwischen dem Laserbearbeitungskopf und dem Werkstück gebildet wird (Patentanspruch 10). Ein derartiger Stellantrieb zur Einstellung des gegenseitigen Abstandes zwischen dem Laserbearbeitungskopf und dem Werkstück ist beispielsweise an bekannten Laserbearbeitungsmaschinen der Firma TRUMPF ^{®}, 71254 Ditzingen, Deutschland vorgesehen. Er sorgt in erster Linie für eine gleich bleibende Fokuslage des Laserbearbeitungsstrahles während der Werkstückbearbeitung und der damit verbundenen Relativbewegung von Werkstück und Laserbearbeitungskopf. Erfindungsgemäß können Einrichtungen, die zur Regelung des Abstandes zwischen dem Laserbearbeitungskopf und dem Werkstück vorgesehen sind, gleichzeitig für die Regelung des Abstandes zwischen dem Werkstück und der Strahlaufnahme genutzt werden. Aufgrund dieser Doppelnutzung reduziert sich der für die Regelung des Abstandes zwischen dem Werkstück und der Strahlaufnahme erforderliche Aufwand auf ein Minimum.

Der Abstandswert auf welchen der Abstand zwischen dem Werkstück und der Strahlaufnahme einzustellen ist und damit auch der Betrag der Stellbewegung zum gegenseitigen Zustellen von Werkstückauflage und Strahlaufnahme kann im Falle der Erfindung auf unterschiedliche Art und Weise definiert werden.

Der Einfachheit halber lässt sich auf empirisch ermittelte Abstandswerte zurückgreifen, die in einem Speicher einer numerischen Antriebssteuerung des Stellantriebes zur gegenseitigen Zustellung von Werkstückauflage und Strahlaufnahme hinterlegt sind (Patentansprüche 11, 24).

Eine optimierte, weil auf den jeweiligen Anwendungsfall individuell abgestimmte Variante der Erfindung sieht vor, dass der einzustellende Abstandswert an dem jeweils zu bearbeitenden Werkstück bestimmt wird (Patentansprüche 12, 25).

Auch zur Bestimmung eines einzustellenden Abstandswertes für den Abstand zwischen dem Werkstück und der Strahlaufnahme wird in bevorzugter Weiterbildung der Erfindung von der vorstehend bereits erwähnten Einrichtung zur Einstellung des gegenseitigen Abstandes zwischen dem Laserbearbeitungskopf und dem Werkstück Gebrauch gemacht (Patentanspruch 13).

Ein funktionssicheres Verfahren zur Bestimmung des einzustellenden Abstandswertes für den Abstand zwischen dem Werkstück und der Strahlaufnahme ist in Patentanspruch 26 beschrieben. Als Ergebnis dieses Verfahrens ergibt sich ein Abstandswert für den gegenseitigen Abstand zwischen dem Werkstück und der Strahlaufnahme und damit ein Betrag für die gegenseitige Zustellbewegung von Werkstück und Strahlaufnahme, bei welchem ein Kontakt zwischen dem Werkstück und der Strahlaufnahme mit Sicherheit vermieden wird. Infolgedessen ist eine kratzerfreie Werkstückbearbeitung unter Relativbewegung von Werkstück und Strahlaufnahme möglich.

In bevorzugter Ausgestaltung des erfindungsgemäßen Verfahrens wird die maximale Durchbiegung des Werkstückes über der Strahlaufnahme durch Abstandsmessung festgestellt (Patentanspruch 27). Für diese Abstandsmessung eignet sich insbesondere die vorstehend genannte Einrichtung zur Einstellung des gegenseitigen Abstandes zwischen dem Laserbearbeitungskopf und dem Werkstück.

Im Interesse einer möglichst einfachen konstruktiven Umsetzung des Erfindungskonzeptes ist ausweislich Patentanspruch 14 vorgesehen, dass zum gegenseitigen Zustellen der Werkstückauflage und der Strahlaufnahme entweder ausschließlich die Werkstückauflage oder ausschließlich die Strahlaufnahme entlang der Strahlachse des Laserstrahls bewegt wird. Ein derartiger Stellantrieb kommt mit einem einzelnen Stellantriebsmotor aus und erlaubt überdies eine einfache Regelung des gegenseitigen Abstandes von Werkstückauflage und Strahlaufnahme.

Gemäß Patentanspruch 15 werden zum gegenseitigen Zustellen der Werkstückauflage und der Strahlaufnahme Antriebskomponenten verwendet, die im Übrigen dazu dienen, Produkte der Werkstückbearbeitung aus dem Arbeitsbereich des Laserstrahls auszuschleusen. Auch diese Doppelnutzung ermöglicht die Einsparung von Bauteilen und damit eine konstruktiv einfache und kostengünstige Umsetzung der Erfindung.

Patentanspruch 16 betrifft konstruktive Maßnahmen zur Kombination der Funktionen "Ausschleusen von Produkten der Werkstückbearbeitung" und "gegenseitiges Zustellen von Werkstückauflage und Strahlaufnahme". Zum Ausschleusen von Produkten der Werkstückbearbeitung werden die Werkstückauflage und die Strahlaufnahme gemeinschaftlich bewegt. Eine gegenseitige Zustellbewegung der Werkstückauflage und der Strahlaufnahme wird unter Bewegungshemmung, insbesondere unter Blockieren entweder der Werkstückauflage oder der Strahlaufnahme gegenüber dem jeweils anderen Bauteil erzeugt.

Im Interesse einer konstruktiv einfachen und dauerhaft funktionssicheren Lösung ist zum Blockieren der Werkstückauflage bzw. der Strahlaufnahme in bevorzugter Ausgestaltung der Erfindung ein Anschlag vorgesehen (Patentanspruch 17).

Dieser Anschlag ist vorteilhafterweise in Richtung der gegenseitigen Zustellbewegung von Strahlaufnahme und Werkstückauflage einstellbar (Patentanspruch 18). Auf diese Art und Weise lassen sich unterschiedliche Endpositionen des an dem Anschlag abgestützten Bauteiles, also entweder der Strahlaufnahme oder der Werkstückauflage in Richtung der gegenseitigen Zustellbewegung definieren. Ist die maximale Stellweglänge bei der gegenseitigen Zustellung von Werkstückauflage und Strahlaufnahme fest vorgegeben, so variiert auch die Endstellung des nicht an dem Anschlag abgestützten Bauteils mit einer Verstellung des Anschlages. Durch eine Verstellung des Anschlages kann dann beispielsweise Verschleiß berücksichtigt werden, der an der Werkstückauflage betriebsbedingt auftritt.

Nachfolgend wird die Erfindung anhand beispielhafter schematischer Darstellungen näher erläutert. Es zeigen:
- Figur 1: eine perspektivische Teildarstellung einer Laserbearbeitungs-maschine mit einer Einheit zum Laserschneiden von Blechen sowie mit einer Einheit zum Stanzen von Blechen,
- Figur 2: die Baugruppe II gemäß Figur 1 in einem ersten Funktionszu-sta nd,
- Figur 3: eine Detaildarstellung der Anordnung gemäß Figur 2,
- Figur 4: die Anordnung gemäß den Figuren 2 und 3 in der Ansicht in Richtung des Pfeils IV in Figur 2,
- Figur 5: die Baugruppe II gemäß Figur 1 in einem zweiten Funktionszustand,
- Figur 6: die Anordnung gemäß Figur 5 in der Ansicht in Richtung des Pfeils VI in Figur 5,
- Figur 7: das Detail VII in Figur 5 bei dem Funktionszustand gemäß Figur 5,
- Figuren 8, 9: die Anordnung gemäß Figur 7 in zwei weiteren Funktionszuständen,
- Figuren 10, 11, 12: eine Werkstückauflage sowie eine Strahlaufnahme der Baugruppe II gemäß Figur 1 mit drei unterschiedlichen Relativlagen und
- Figuren 13, 14, 15: Prinzipdarstellungen zur Veranschaulichung der Bestimmung eines einzustellenden gegenseitigen Abstandes der Werkstückauflage und der Strahlaufnahme gemäß den Figuren 10, 11, 12.

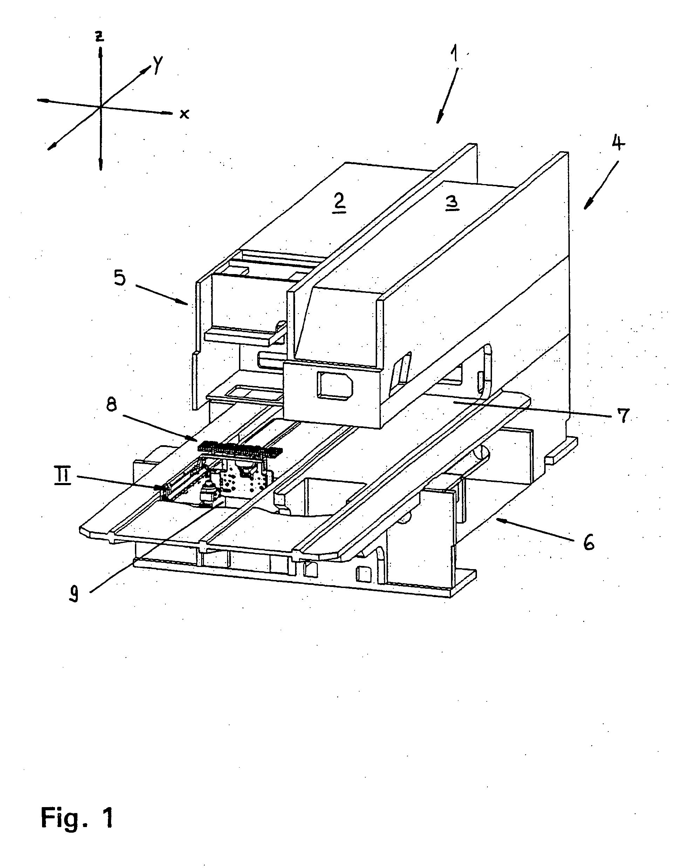

Gemäß Figur 1 umfasst eine als Kombimaschine ausgeführte Laserbearbeitungsmaschine 1 eine Einheit 2 zum Laserschneiden von Blechen sowie eine damit kombinierte Einheit 3 zum stanzenden Bearbeiten von Blechen. Ein gemeinsames Maschinengestell 4 besitzt C-Form und weist einen oberen Gestellschenkel 5 sowie einen unteren Gestellschenkel 6 auf. An dem freien Ende des oberen Gestellschenkels 5 sind nebeneinander der nicht dargestellte Stanzkopf der Einheit 3 zum stanzenden Bearbeiten sowie der gleichfalls nicht gezeigte Laserbearbeitungskopf zum Laserschneiden von Werkstücken bzw. Blechen angebracht. Sowohl der Stanzkopf als auch der Laserbearbeitungskopf sind herkömmlicher Bauart. Der Laserbearbeitungskopf ist an dem oberen Gestellschenkel 5 in den drei Achsrichtungen eines x/y/z-Koordinatensystems über eine jeweils verhältnismäßig kurze Wegstrecke bewegbar.

In einem Rachenraum 7 des C-förmigen Maschinengestells 4 ist eine nicht gezeigte Koordinatenführung üblicher Bauart untergebracht. Zu bearbeitende Bleche werden an der Koordinatenführung mit Hilfe von herkömmlichen Spannpratzen fixiert und können mittels der Koordinatenführung gegenüber dem Stanzkopf und auch gegenüber dem Laserbearbeitungskopf der Laserbearbeitungsmaschine 1 in der von der x-Achse sowie von der y-Achse aufgespannten Horizontalebene bewegt werden. Die mittels der Koordinatenführung erzeugte Bewegung der Bleche kann sowohl zur Positionierung des jeweiligen Bleches gegenüber der betreffenden Bearbeitungseinrichtung dienen als auch zum Zwecke der Blechbearbeitung ausgeführt werden. An dem Laserbearbeitungskopf sind zusätzliche Positionier- und Bearbeitungsbewegungen aufgrund der vorstehend beschriebenen Beweglichkeit des Laserbearbeitungskopfes möglich.

Bei seiner Bewegung über den unteren Gestellschenkel 6 liegt das betreffende Blech in herkömmlicher Weise auf einer an der Oberseite des unteren Gestellschenkels 6 angebrachten Bürstenauflage auf. Diese Bürstenauflage ist in Figur 1 im Umfang einer Werkstückauflage 8 der Einheit 2 zum Laserschneiden gezeigt.

Gemeinsam mit weiteren Teilen der Bürstenauflage an dem unteren Gestellschenkel 6 bildet die Werkstückauflage 8 eine Abdeckung für eine Ausschleusöffnung 9 des unteren Gestellschenkels 6. Über die Ausschleusöffnung 9 werden in dem gezeigten Beispielsfall Blechausschnitte abgeführt, die zuvor mittels des Laserbearbeitungskopfes aus großformatigen Blechtafeln gewonnen worden sind.

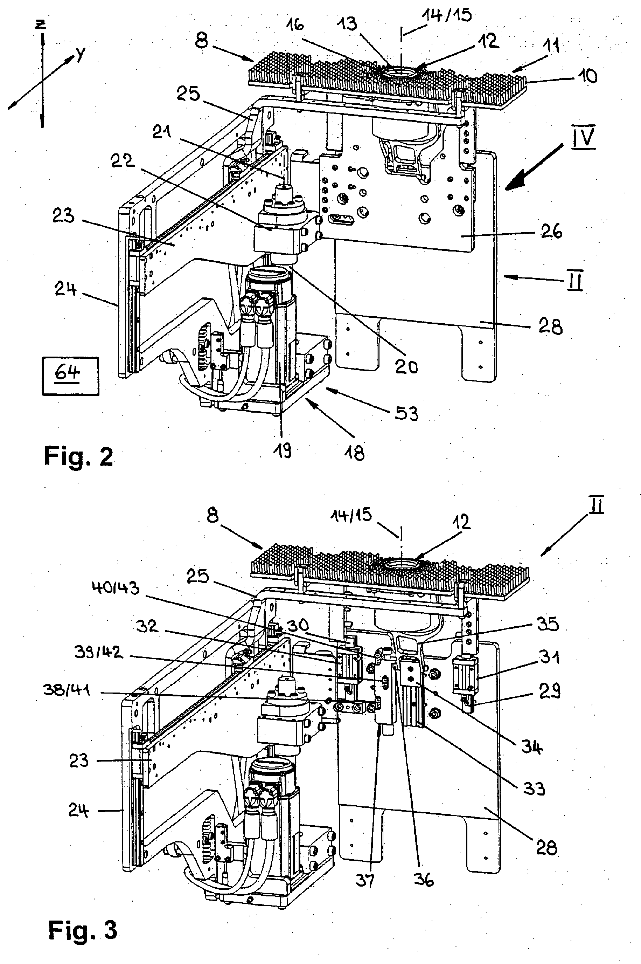

Sowohl die zu bearbeitende Blechtafel als auch die daraus gewonnenen Werkstückausschnitte liegen bei horizontaler Ausrichtung der Werkstückauflage 8 auf den freien Enden von Borsten 10 auf, die ihrerseits ein Bürstenfeld 11 der Werkstückauflage 8 bilden (Figur 2). Die Werkstückauflage 8 ist Teil einer Baugruppe II, die in Figur 2 in Einzeldarstellung gezeigt ist.

Außer der Werkstückauflage 8 umfasst die Baugruppe II eine Strahlaufnahme 12 mit einer Aufnahmeöffnung 13. Mit der Aufnahmeöffnung 13 ist die Strahlaufnahme 12 beim Laserschneiden von Blechen in Richtung eines in Figur 2 durch eine Strahlachse 14 angedeuteten Laserstrahls 15 unterhalb des Laserbearbeitungskopfes angeordnet. Nach dem Durchdringen des zu bearbeitenden Bleches taucht der Laserstrahl 15 in die Aufnahmeöffnung 13 der Strahlaufnahme 12 ein. Dabei ist die Strahlaufnahme 12 an eine nicht gezeigte Unterdruckquelle angeschlossen. Mit Hilfe dieser Unterdruckquelle werden über die Strahlaufnahme 12 Dämpfe und Schlacke abgesaugt, die sich beim Schneiden der zu bearbeitenden Bleche an der Bearbeitungsstelle des Laserstrahls 15 bilden. Um einen ringartigen Rand 16 der Strahlaufnahme 12 herum sind Borsten 10 angeordnet, die bis unmittelbar an den Rand 16 der Strahlaufnahme 12 heranreichen.

Zum Ausschleusen von Blechausschnitten aus dem Bearbeitungsbereich des Laserstrahls 15 führen die Werkstückauflage 8 sowie die Strahlaufnahme 12 gemeinschaftlich eine Ausschleusbewegung aus. Außerdem sind die Werkstückauflage 8 und die Strahlaufnahme 12 entlang der Strahlachse 14 des Laserstrahls 15 relativ zueinander zustellbar. Beide Funktionen werden mit Hilfe eines Antriebes 18 realisiert, der folglich einen Ausschleus- und Stellantrieb bildet.

Ein in seiner Drehrichtung umsteuerbarer Antriebsmotor 19 des Antriebes 18 dient dementsprechend unter anderem als Stellantriebsmotor. Über einen nicht gezeigten Zahnriemen treibt der Antriebsmotor 19 eine Kugelrollspindel 20 um eine Spindeldrehachse 21 an. Eine auf der Kugelrollspindel 20 aufsitzende und entlang der Spindeldrehachse 21 bewegliche Spindelmutter 22 ist mit einer Antriebsplatte 23 verschraubt, die ihrerseits an einer maschinengestellfesten Führungsplatte 24 in z-Richtung beweglich geführt ist. An der von der Spindelmutter 22 abliegenden Seite führt die Antriebsplatte 23 ihrerseits einen winkelartigen Mitnehmer 25 in y-Richtung. Zur Führung des Mitnehmers 25 sind an der Antriebsplatte 23 zwei in z-Richtung voneinander beabstandete Linearführungen vorgesehen. Der Mitnehmer 25 ist mit einem horizontalen Schenkel an zwei Lagerstellen mit der Werkstückauflage 8 schwenkbeweglich verbunden.

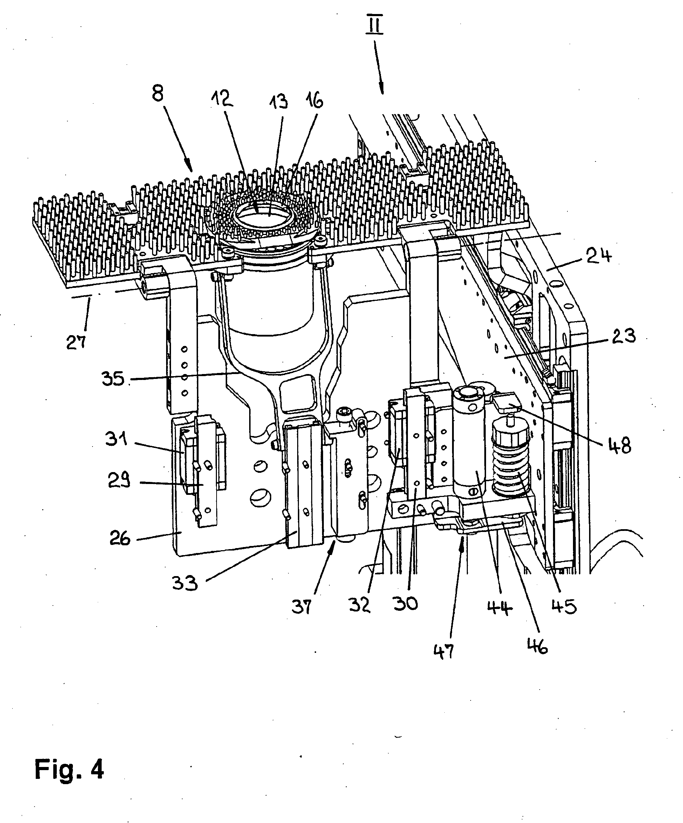

Schwenklager sind gleichfalls vorgesehen zwischen der Werkstückauflage 8 und einer höhenbeweglichen Platte 26. Diese Schwenklager definieren eine Schwenkachse 27 der Werkstückauflage 8 (Figur 4). Außerdem bilden die Schwenklager zwischen der höhenbeweglichen Platte 26 und der Werkstückauflage 8 Anschläge für die Werkstückauflage 8 aus, die verhindern, dass die Werkstückauflage 8 über ihre horizontale Stellung nach oben hinausschwenken kann.

Die höhenbewegliche Platte 26 ist an einer zweiten maschinengestellfesten Führungsplatte 28 in z-Richtung verschiebbar geführt. Zu diesem Zweck ist die Führungsplatte 28 mit in z-Richtung verlaufenden Führungsschienen 29, 30 versehen (Figuren 3, 4). An der höhenbeweglichen Platte 26 sind auf den Führungsschienen 29, 30 aufsitzende Linearlager 31, 32 montiert.

Zwischen den Führungsschienen 29, 30 zur Führung der höhenbeweglichen Platte 26 ist die Führungsplatte 28 mit einer gleichfalls in z-Richtung verlaufenden Führungsschiene 33 versehen (Figuren 3, 4). Die Führungsschiene 33 lagert einen Führungsschlitten 34, der seinerseits an das untere Ende einer gabelartigen Verbindungsstange 35 angelenkt ist. An ihrem zu der Werkstückauflage 8 hin weisenden oberen Ende ist die Verbindungsstange 35 schwenkbeweglich an die Strahlaufnahme 12 angebundnen. Ein Schwenklagerzapfen der Gelenkverbindung zwischen dem unteren Ende der Verbindungsstange 35 und dem auf der Führungsschiene 33 aufsitzenden Führungsschlitten 34 ist über die Lageraugen an der Verbindungsstange 35 hinaus verlängert und bildet mit einem der sich ergebenden Überstände einen Gegenanschlag 36 aus, der einem Anschlag 37 zugeordnet ist. Der Anschlag 37 ist über insgesamt drei Verbindungsschrauben 38, 39, 40 an der maschinengestellfeste Führungsplatte 28 in z-Richtung schwimmend gelagert. Dabei durchsetzen die Verbindungsschrauben 38, 39, 40 Langlöcher 41, 42, 43, die sich an dem Anschlag 37 mit ihrer langen Achse in z-Richtung erstrecken.

An der von der höhenbeweglichen Platte 26 abgewandten Seite lagert die maschinengestellfeste Führungsplatte 28 einen Vorspannzylinder 44 sowie einen gedämpften Anschlag 45 (Figur 4). Eine aus dem Vorspannzylinder 44 nach unten hin austretende, in Figur 4 nicht erkennbare Kolbenstange ist an ihrem freien Ende mit einer Lasche 46 verschraubt, die von einem Schenkel eines Profilstückes 47 gebildet wird. Das Profilstück 47 ist fest mit der höhenbeweglichen Platte 26 verbunden. Der Lasche 46 gegenüberliegend springt an dem Profilstück 47 eine Anschlagnase 48 vor, welche den an der Führungsplatte 28 angebrachten gedämpften Anschlag 45 übergreift.

In den Figuren 1 bis 4 ist die Baugruppe II mit horizontal ausgerichteter Werkstückauflage 8 gezeigt. Bei diesem Funktionszustand der Baugruppe II werden Fertigteile, die mittels des Laserstrahls 15 freigeschnitten worden sind, wenigstens teilweise von der Werkstückauflage 8, im Einzelnen von deren Bürstenfeld 11, gelagert. Zum Ausschleusen der von der Werkstückauflage 8 unterfangenen Bearbeitungsprodukte führt die Werkstückauflage 8 gemeinschaftlich mit der Strahlaufnahme 12 die vorstehend bereits erwähnte Ausschleusbewegung aus. Diese Ausschleusbewegung besitzt einen translatorischen sowie einen rotatorischen Anteil. Die translatorische Bewegung von Werkstückauflage 8 und Strahlaufnahme 12 erfolgt in z-Richtung. An diese lineare Bewegung schließt sich eine Rotationsbewegung um die Schwenkachse 27 der Werkstückauflage 8 an.

Gemäß den Figuren 1 bis 4 nimmt die Antriebsplatte 23 an der maschinengestellfesten Führungsplatte 24 in z-Richtung ihre obere Endstellung ein. In dieser oberen Endstellung ist die Antriebsplatte 23 über die Spindelmutter 22 und die Kugelrollspindel 20 durch den Antriebsmotor 19 gegen Abwärtsbewegung blockiert. Der an der Antriebsplatte 23 in z-Richtung abgestützte Mitnehmer 25 hält die Werkstückauflage 8 und über diese die Strahlaufnahme 12 sowie die höhenbewegliche Platte 26 in der dargestellten Position. Aufgrund entsprechender Vorspannung wird durch den Vorspannzylinder 44 und dessen an dem Profilstück 47 angreifende Kolbenstange auf die höhenbewegliche Platte 26 und damit auch auf die Strahlaufnahme 12 sowie auf die Werkstückauflage 8 eine in z-Richtung nach unten gerichtete Kraft ausgeübt. Diese Kraft wird durch die von dem Antriebsmotor 19 erzeugte Gegenkraft kompensiert. Durch die Anschläge an ihrer Gelenkverbindung mit der höhenbeweglichen Platte 26 ist die Werkstückauflage 8 in ihrer horizontalen Stellung abgestützt.

Wird bei diesem Funktionszustand der Baugruppe II der Antriebsmotor 19 eingeschaltet und mit entsprechender Drehrichtung betrieben, so bewegen sich die Spindelmutter 22 auf der Kugelrollspindel 20 und mit der Spindelmutter 22 die Antriebsplatte 23 ausgehend von ihrer Position gemäß den Figuren 1 bis 4 nach unten. Synchron mit der Antriebsplatte 23 bewegen sich die höhenbewegliche Platte 26 sowie die Strahlaufnahme 12 und die Werkstückauflage 8 unter der Wirkung der an dem Vorspannzylinder 44 nun freigesetzten Vorspannkraft in negativer z-Richtung. Aufgrund der synchronen Bewegung von Antriebsplatte 23 und Werkstückauflage 8 behält der Mitnehmer 25 an der Antriebsplatte 23 zunächst die in den Figuren 1 bis 4 gezeigte Position in y-Richtung bei.

Nach einem Abwärtshub von etwa zwanzig Millimetern trifft die Anschlagnase 48 an dem mit der höhenbeweglichen Platte 26 fest verbundenen Profilstück 47 auf den maschinengestellfesten gedämpften Anschlag 45. Durch den gedämpften Anschlag 45 wird die höhenbewegliche Platte 26 und mit dieser die Strahlaufnahme 12 sowie die Werkstückauflage 8 gegen eine weitere lineare Bewegung in negativer z-Richtung blockiert. Damit endet der translatorische Anteil der Ausschleusbewegung von Werkstückauflage 8 und Strahlaufnahme 12.

Durch den Antriebsmotor 19 in negativer z-Richtung weiter bewegt wird die Antriebsplatte 23. Infolge der Abwärtsbewegung der Antriebsplatte 23 verschiebt sich der Mitnehmer 25 entlang der Antriebsplatte 23 in y-Richtung zu der Werkstückauflage 8 hin. Gleichzeitig schwenkt der Mitnehmer 25 die Werkstückauflage 8 gemeinsam mit der Strahlaufnahme 12 um die Schwenkachse 27 der Werkstückauflage 8 nach unten. Es ergibt sich damit der rotatorische Teil der Ausschleusbewegung von Werkstückauflage 8 und Strahlaufnahme 12.

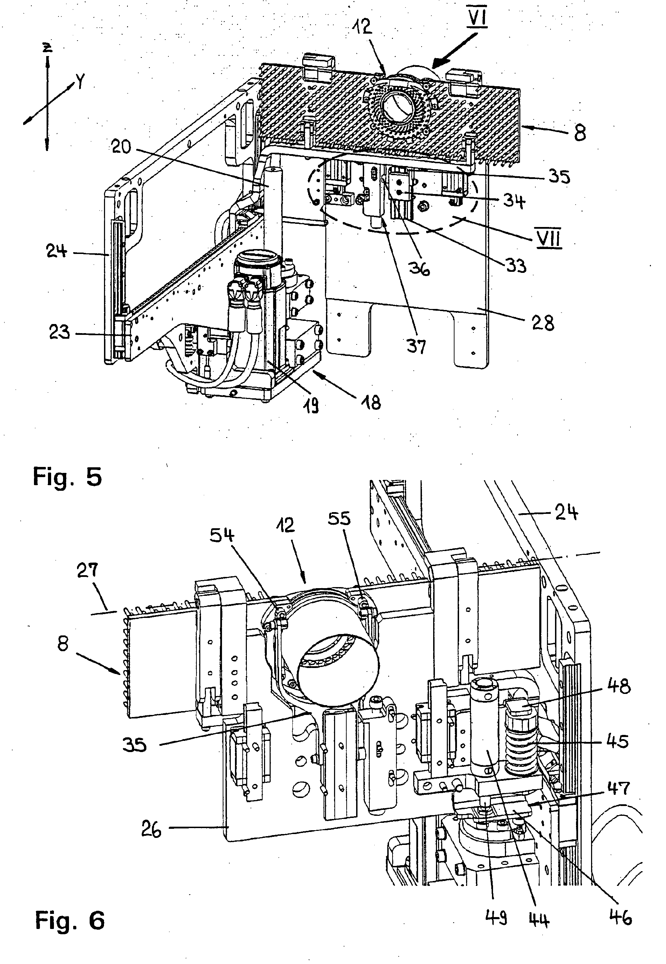

Durch Abschalten des Antriebsmotors 19 wird die Ausschleusbewegung von Werkstückauflage 8 und Strahlaufnahme 12 beendet, sobald sich an der Baugruppe II die Verhältnisse gemäß den Figuren 5 bis 7 einstellen.

Figur 6 zeigt die Anordnung gemäß Figur 5 von der Seite der maschinengestellfesten Führungsplatte 28 her. In Figur 6 zu erkennen ist die mit dem Bezugszeichen 49 versehene Kolbenstange zwischen dem maschinengestellfesten Vorspannzylinder 44 und der Lasche 46 des mit der höhenbeweglichen Platte 26 verbundenen Profilstücks 47. Außerdem zeigt Figur 6 die Anschlagnase 48 des Profilstückes 47, wie sie auf dem gedämpften Anschlag 45 aufliegt.

Den Figuren 5 bis 7 gleichfalls zu entnehmen sind die Verhältnisse im Bereich der Linearführung des unteren Endes der Verbindungsstange 35 an der maschinengestellfesten Führungsplatte 28. Das untere Ende der Verbindungsstange 35 sowie der daran angelenkte Führungsschlitten 34 nehmen an der mit der Führungsplatte 28 verbundenen Führungsschiene 33 in z-Richtung eine Position ein, bei welcher der entlang der Führungsschiene 33 bewegliche Gegenanschlag 36 in z-Richtung seinen maximalen Abstand von einem Anschlagvorsprung 50 des Anschlages 37 an der Führungsplatte 28 aufweist.

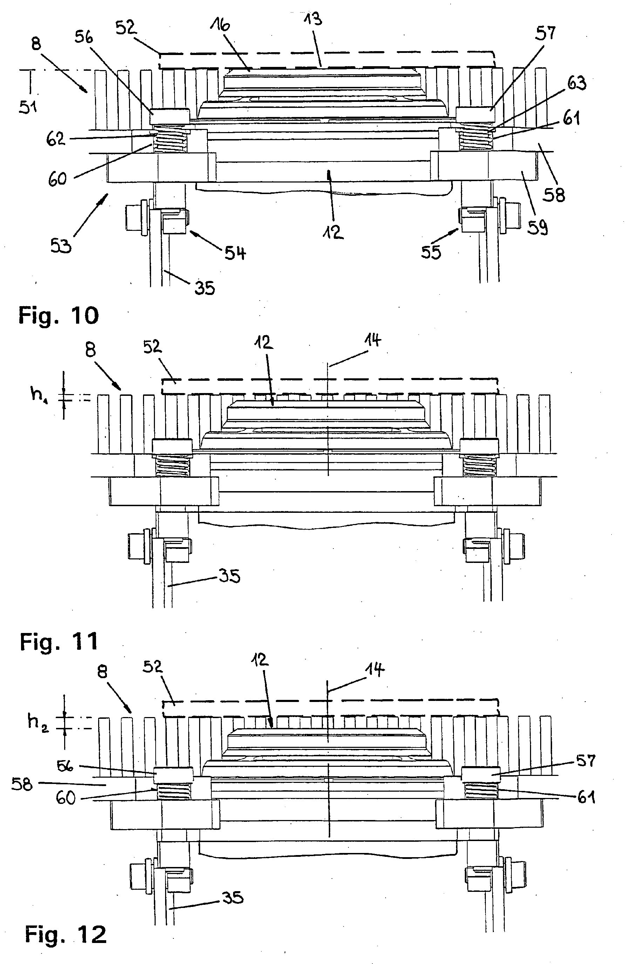

Die Strahlaufnahme 12 und die Werkstückauflage 8 nehmen bei dem Betriebszustand der Baugruppe II gemäß den Figuren 5 bis 7 die in Figur 10 dargestellte gegenseitige Lage ein. Der Abstand zwischen der Werkstückauflage 8 und der Strahlaufnahme 12 senkrecht zu einer an der Werkstückauflage 8 ausgebildeten Auflageebene 51 ist auf den Abstandswert Null eingestellt. Ein von der Werkstückauflage 8 unterfangenes und in Figur 10 angedeutetes Werkstück in Form eines Bleches 52 würde folglich auch auf der Strahlaufnahme 12, im Einzelnen auf der in Figur 10 nach oben weisenden Stirnfläche des Randes 16 der Aufnahmeöffnung 13 aufliegen.

Bewirkt wird die gegenseitige Zustellung der Werkstückauflage 8 und der Strahlaufnahme 12 durch eine Stelleinrichtung 53. Teil der Stelleinrichtung 53 ist die gabelförmige Verbindungsstange 35, die mit ihren beiden oberen Enden an der Strahlaufnahme 12 angelenkt ist. Zu diesem Zweck weist die Strahlaufnahme 12 zwei Lagerblöcke 54, 55 auf (Figuren 6, 10). Neben den Anlenkstellen der Verbindungsstange 35 sind in die Lagerblöcke 54, 55 Spannschrauben 56, 57 eingedreht (Figur 10). Diese durchsetzen mit einem glattwandigen Schaft eine Basisplatte 58 der Werkstückauflage 8 sowie einen mit der Basisplatte 58 an deren Unterseite fest verbundenen Tragflansch 59. In nicht im Einzelnen gezeigten Durchtrittsöffnungen des Tragflansches 59 ist der glattwandige Schaft der Spannschrauben 56, 57 im Innern von Führungsbuchsen angeordnet und dadurch reibungsarm und in radialer Richtung weitgehend spielfrei geführt. Durchtrittsöffnungen 60, 61 an der Basisplatte 58 der Werkstückauflage 8 sind demgegenüber radial erweitert. In diese Durchtrittsöffnungen sind Spannfedern 62, 63 in Form von Schraubenfedern eingesetzt, welche den glattwandigen Schaft der Spannschrauben 56, 57 umschließen und an ihren axialen Enden einerseits auf dem Tragflansch 59 und andererseits an der Unterseite von Schraubenköpfen der Spannschrauben 56, 57 abgestützt sind. Aufgrund ihrer Vorspannung ziehen die Spannfedern 62, 63 bei dem Funktionszustand gemäß Figur 10 die an der Strahlaufnahme 12 vorgesehenen Lagerblöcke 54, 55 gegen die Unterseite des Tragflansches 59 an der Basisplatte 58 der Werkstückauflage 8.

Wird ausgehend von dem in den Figuren 5 bis 7 dargestellten Betriebszustand der Baugruppe II der ebenfalls einen Teil der Stelleinrichtung 53 bildende Antriebsmotor 19 mit einer Motordrehrichtung betrieben, welche der Motordrehrichtung bei der vorausgegangenen Ausschleusbewegung von Werkstückauflage 8 und Strahlaufnahme 12 entgegengerichtet ist, so bewegt die von dem Antriebsmotor 19 angetriebene Spindelmutter 22 die Antriebsplatte 23 in z-Richtung nach oben. Mit der Antriebsplatte 23 wird der Mitnehmer 25 in positiver z-Richtung verlagert. Die höhenbewegliche Platte 26 mit der daran angelenkten Einheit aus Werkstückauflage 8 und Strahlaufnahme 12 behält zunächst ihre anfängliche Position in z-Richtung bei. Infolgedessen schwenkt der sich nach oben bewegende Mitnehmer 25 die Werkstückauflage 8 in ihre horizontale Lage. Dabei verschiebt sich der Mitnehmer 25 entlang der Antriebsplatte 23 in y-Richtung.

Ist die Werkstückauflage 8 horizontal ausgerichtet, so bewirkt eine fortgesetzte Hubbewegung von Antriebsplatte 23 und Mitnehmer 25 eine linear nach oben gerichtete Bewegung der Werkstückauflage 8 sowie der daran angebrachten Strahlaufnahme 12. Gemeinsam mit der Baueinheit aus Werkstückauflage 8 und Strahlaufnahme 12 bewegt sich die mit der Werkstückauflage 8 verbundene höhenbewegliche Platte 26 in positiver z-Richtung. Die lineare Hubbewegung von Werkstückauflage 8, Strahlaufnahme 12 und höhenbeweglicher Platte 26 wird gegen die Wirkung der sich an dem Vorspannzylinder 44 aufbauenden Rückstellkraft ausgeführt. Die an der Gelenkverbindung zwischen der Werkstückauflage 8 und der höhenbeweglichen Platte 26 vorgesehenen Anschläge für die Werkstückauflage 8 verhindern, dass die Werkstückauflage 8 aufgrund der Beaufschlagung durch den Mitnehmer 25 über ihre horizontale Lage nach oben schwenkt.

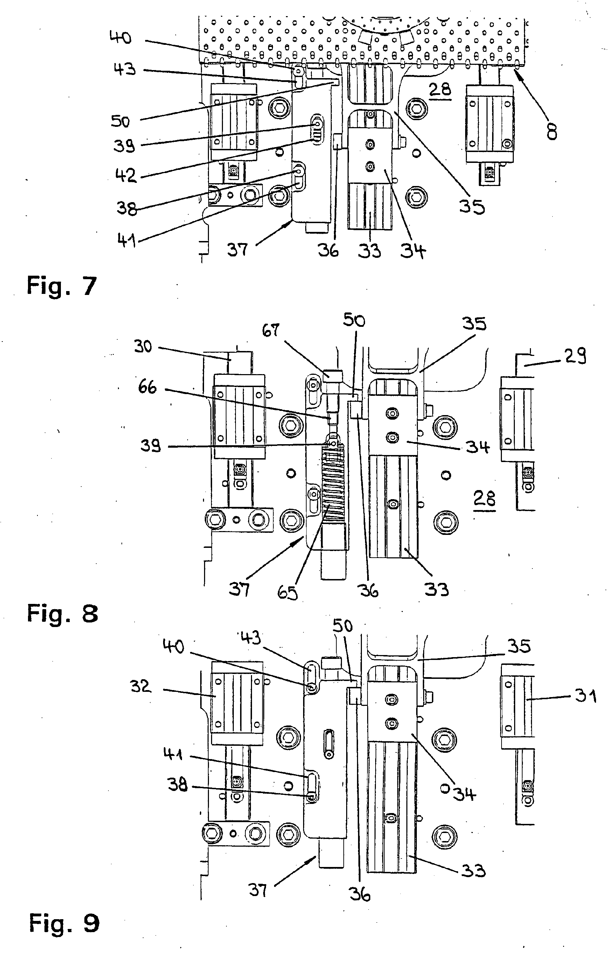

Die Strahlaufnahme 12 nimmt bei ihrer mit der Bewegung der Werkstückauflage 8 gekoppelten Bewegung die an ihr angelenkte Verbindungsstange 35 in z-Richtung nach oben mit. Infolgedessen verlagert sich das untere Ende der Verbindungsstange 35 gemeinsam mit dem damit verbundenen Führungsschlitten 34 und dem an der Gelenkverbindung zwischen dem unteren Ende der Verbindungsstange 35 und dem Führungsschlitten 34 vorgesehenen Gegenanschlag 36 ausgehend von den Verhältnissen gemäß den Figuren 5 bis 7 in positiver z-Richtung. Im Laufe der sich an das Hochklappen der Werkstückauflage 8 anschließenden, mit horizontal ausgerichteter Werkstückauflage 8 ausgeführten Linearbewegung von Werkstückauflage 8 und Strahlaufnahme 12 läuft der an dem unteren Ende der Verbindungsstange 35 vorragende Gegenanschlag 36 auf den Anschlagvorsprung 50 des Anschlages 37 an der maschinengestellfesten Führungsplatte 28 auf (Figur 8). Zu diesem Zeitpunkt nehmen die Werkstückauflage 8 und die Strahlaufnahme 12 nach wie vor die gegenseitige Lage gemäß Figur 10 ein. Das heißt die Oberseite des Randes 16 an der Aufnahmeöffnung 13 der Strahlaufnahme 12 fluchtet noch immer mit den freien Enden der Borsten 10 des Bürstenfeldes 11.

Bei fortgesetztem Betrieb des Antriebsmotors 19 wird die Werkstückauflage 8 über die Antriebsplatte 23 und den Mitnehmer 25 weiter in positiver z-Richtung bewegt. Diese Bewegung kann die Strahlaufnahme 12 aufgrund ihrer über die Verbindungsstange 35 bewirkten Abstützung an dem Anschlag 37 jedoch nicht mitvollziehen. Daraus resultiert eine gegenseitige Zustellbewegung von Werkstückauflage 8 und Strahlaufnahme 12 in Richtung der Strahlachse 14 des Laserstrahls 15. Ausgeführt wird diese Zustellbewegung gegen die Wirkung der zunehmend komprimierten Spannfedern 62, 63. Der Betrag der Zustellbewegung ist mittels einer in Figur 2 schematisch angedeuteten numerischen Antriebssteuerung 64 innerhalb konstruktiv vorgegebener Grenzen beliebig definierbar. Gemäß Figur 11 ist die Werkstückauflage 8 relativ zu der an dem maschinengestellfesten Anschlag 37 abgestützten Strahlaufnahme 12 mit einer Zustellbewegung des Betrages h₁ zugestellt. Wie aus Figur 11 gleichfalls hervorgeht, weist bei dieser gegenseitigen Zustellung von Werkstückauflage 8 und Strahlaufnahme 12 ein auf dem Bürstenfeld 11 der Werkstückauflage 8 aufliegendes Blech 52 an seiner Unterseite den Abstand h₁ von der Strahlaufnahme 12 auf. Ausweislich Figur 12 besitzt die gegenseitige Zustellbewegung von Werkstückauflage 8 und Strahlaufnahme 12 und folglich auch der Abstand zwischen dem von der Werkstückauflage 8 unterfangenen Blech 52 und der Strahlaufnahme 12 den Betrag h₂.

In dem dargestellten Beispielsfall ist h₂ doppelt so groß wir h₁. Der Abstand h₂ zwischen Werkstückauflage 8 und Strahlaufnahme 12 wird für den Fall gewählt, dass das Blech 52 mit einer schnellen Positionierbewegung über die Werkstückauflage 8 zu bewegen ist. Auf den gegenseitigen Abstand h₁ werden die Werkstückauflage 8 und die Strahlaufnahme 12 für langsamere Bearbeitungsbewegungen eingestellt, welche das mittels der Koordinatenführung der Laserbearbeitungsmaschine 1 bewegte Blech 52 relativ zu dem Laserstrahl 15 ausführt. Sowohl bei der Positionierbewegung als auch bei der Bearbeitungsbewegung des Bleches 52 sind ein Kontakt des Bleches 52 mit der Strahlaufnahme 12 und eine damit verbundene Kratzerbildung an der Blechunterseite ausgeschlossen.

Der in Figur 10 veranschaulichte Abstandswert Null des gegenseitigen Abstandes zwischen der Werkstückauflage 8 und der Strahlaufnahme 12 wird dann gewählt, wenn das auf der Werkstückauflage 8 aufliegende Blech 52 und die Strahlaufnahme 12 den gleichen Bewegungszustand aufweisen, also nicht relativ zueinander bewegt werden. Dies ist beispielsweise dann der Fall, wenn das Blech 52 auf der Werkstückauflage 8 unbewegt ruht und eine Werkstückbearbeitung ausschließlich durch eine Bewegung des Laserstrahls 15 erfolgt, die aufgrund der Beweglichkeit des Laserbearbeitungskopfes an dem Maschinengestell 4 möglich ist. Derartige Bearbeitungsbewegungen des Laserbearbeitungskopfes bzw. des Laserstrahls 15 werden beispielsweise zum Erstellen des abschließenden Trennschnittes beim Ausschneiden von Blechteilen ausgeführt.

Aus konstruktiven Gründen kann der gegenseitige Abstand der Werkstückauflage 8 bzw. des Bleches 52 und der Strahlaufnahme 12 maximal auf den Abstandswert h₂ eingestellt werden. Wie Figur 12 zeigt, laufen bei dem Abstandswert h₂ die Schraubenköpfe der Spannschrauben 56, 57 mit ihrer Unterseite auf einen gegenüberliegenden Rand der Durchtrittsöffnungen 60, 61 an der Basisplatte 58 der Werkstückauflage 8 auf. Da gleichzeitig die Spannschrauben 56, 57 über die Verbindungsstange 35 an dem maschinengestellfesten Anschlag 37 abgestützt sind, endet damit die vertikale Beweglichkeit der Werkstückauflage 8 relativ zu der Strahlaufnahme 12. Spätestens bei diesem Funktionszustand der Baugruppe II schaltet der Antriebsmotor 19 infolge entsprechender Ansteuerung ab. Wird der Antriebsmotor 19 beispielsweise aufgrund einer Fehlfunktion der Antriebssteuerung 64 bei Erreichen des Betriebszustandes gemäß Figur 12 nicht abgeschaltet, so kann der Antriebsmotor 19 die Einheit aus Werkstückauflage 8, Strahlaufnahme 12 und höhenbeweglicher Platte 26 weiter in positiver z-Richtung bewegen, bis die Werkstückauflage 8 einen mechanischen Festanschlag anfährt. Bei dieser auf Störfälle beschränkten Zusatzbewegung verschiebt der Gegenanschlag 36 an dem unteren Ende der an die Strahlaufnahme 12 angelenkten Verbindungsstange 35 den Anschlag 37 unter Überwindung einer Gegenkraft nach oben. Diese Gegenkraft wird von einer Stellfeder 65 erzeugt (Figur 6), die an der Unterseite der maschinengestellfesten Verbindungsschraube 39 zwischen dieser und dem Gehäuse des Anschlages 37 vorgespannt ist. Aufgrund entsprechender gegenseitiger Abstimmung der Härten der Stellfeder 65 einerseits und der Spannfedern 62, 63 zwischen der Strahlaufnahme 12 und der Werkstückauflage 8 andererseits verkürzt sich die Stellfeder 65 nur bei irregulären Betriebszuständen der beschriebenen Art, nicht aber bei regulären, unter Komprimieren der Spannfedern 62, 63 bewirkten gegenseitigen Zustellbewegungen von Werkstückauflage 8 und Strahlaufnahme 12.

Auch die störungsbedingte Zusatzbewegung von Werkstückauflage 8 und Strahlaufnahme 12 ist in z-Richtung geführt. Hierfür sorgen die aus Figur 8 ersichtlichen Überstände der maschinengestellfesten Führungsschienen 29, 30 gegenüber den mit der höhenbeweglichen Platte 26 verbundenen Linearlagern 31, 32.

Bei Auftreffen der Werkstückauflage 8 auf den mechanischen Festanschlag ergeben sich an dem Anschlag 37 für die Verbindungsstange 35 die in Figur 9 gezeigten Verhältnisse.

Das Niveau in z-Richtung, auf welchem die gegenseitige Zustellung der Werkstückauflage 8 und der Strahlaufnahme 12 ausgehend von dem gegenseitigen Abstandswert Null gemäß Figur 10 einsetzt und somit auch die Endlage, welche die Werkstückauflage 8 bei regulärem Betrieb in z-Richtung einnehmen kann, lässt sich über eine Höhenverstellung des an der maschinengestellfesten Führungsplatte 28 vorgesehenen Anschlages 37 variieren. Eine derartige Höhenverstellung wird u. a. zum Ausgleich einer verschleißbedingten Verkürzung der Borsten 10 der Werkstückauflage 8 vorgenommen.

Der Verstellmechanismus umfasst die vorstehend bereits erwähnte vorgespannte Stellfeder 65, die gemäß Figur 8 in einer Bohrung im Innern des Anschlages 37 vorgesehen ist und die sich einerseits an dem Gehäuse des Anschlages 37 und andererseits an der in die maschinengestellfeste Führungsplatte 28 eingreifenden Verbindungsschraube 39 abstützt. An der von der Stellfeder 65 abliegenden Seite wird die Verbindungsschraube 39 von einer Stellschraube 66 beaufschlagt. Die Stellschraube 66 greift in ein Innengewinde an dem Gehäuse des Anschlages 37 ein. Durch Drehen der Stellschraube 66 lässt sich der Anschlag 37 je nach Drehrichtung der Stellschraube 66 gegen die Wirkung der Stellfeder 65 in positiver z-Richtung oder mit Unterstützung der Stellfeder 65 in negativer z-Richtung zustellen. Zur Sicherung der mittels der Stellschraube 66 vorgenommenen Einstellung dient eine Sicherungsschraube 67. In dem gezeigten Beispielsfall ist eine Höhenverstellung des Anschlages 37 über einen Verstellweg von 2,5 Millimetern möglich.

Die Abstandswerte, auf welche der Abstand zwischen der Werkstückauflage 8 und der Strahlaufnahme 12 bzw. der Abstand zwischen einem Blech 52 und der Strahlaufnahme 12 im Interesse optimierter Bearbeitungsabläufe einzustellen ist, können empirisch ermittelt und in Form von Stellwerten für den Antriebsmotor 19 in der numerischen Antriebssteuerung 64 hinterlegt werden. Abhängig sind die einzustellenden Abstandswerte von unterschiedlichen Parametern, beispielsweise von dem Werkstoff und von der Dicke der zu bearbeitenden Werkstücke.

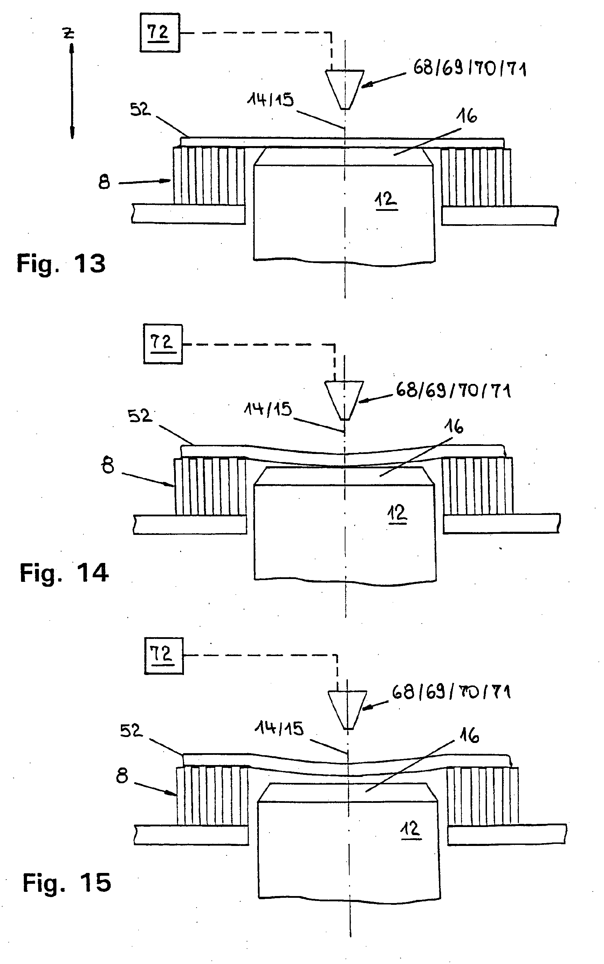

Ergänzend oder alternativ besteht die Möglichkeit, die einzustellenden Abstandswerte individuell, d. h. anhand des jeweils zu bearbeitenden Werkstückes zu definieren. Das zu diesem Zweck anzuwendende Verfahren ist in den Figuren 13 bis 15 skizziert.

In Figur 13 sind die Werkstückauflage 8 und die Strahlaufnahme 12 der Laserbearbeitungsmaschine 1 auf einen gegenseitigen Abstand mit dem Abstandswert Null eingestellt. Das Blech 52 liegt dementsprechend sowohl auf dem Bürstenfeld 11 der Werkstückauflage 8 als auch auf dem Rand 16 der Aufnahmeöffnung 13 an der Strahlaufnahme 12 auf. Oberhalb des Bleches 52 ist von einem Laserbearbeitungskopf 68 lediglich eine Laserdüse 69 dargestellt. Die Laserdüse 69 ist gleichzeitig Teil einer Einrichtung 70 zur Fokuslageneinstellung. Mittels der Einrichtung 70 wird bei Bearbeitungsbewegungen eine konstante Fokuslage des Laserstrahls 15 an dem Blech 52 gewährleistet. Zu diesem Zweck umfasst die Einrichtung 70 zur Fokuslageneinstellung eine kapazitive Messeinrichtung 71 zur Bestimmung des Abstandes zwischen der Laserdüse 69 des Laserbearbeitungskopfes 68 und der Oberseite des Blechs 52 sowie einen Stellantrieb 72 zur Einstellung des Laserbearbeitungskopfes 68 bzw. der Laserdüse 69 in z-Richtung. Die Laserdüse 69 wird bei der kapazitiven Abstandsmessung genutzt. Die Einrichtung 70 zur Fokuslageneinstellung ist bekannter Bauart und wird von der Firma TRUMPF ^{®} in dieser Form angeboten.

Zur Bestimmung eines Abstandswertes für den Abstand zwischen der Werkstückauflage 8 und der Strahlaufnahme 12, bei welchem ein Kontakt zwischen der Unterseite des Bleches 52 und der Strahlaufnahme 12 und eine damit bei der Blechbearbeitung verbundene Beschädigung der Unterseite des Bleches 52 mit Sicherheit ausgeschlossen ist, wird der Laserbearbeitungskopf 68 über der Strahlaufnahme 12 in eine Position bewegt, bei welcher die Strahlachse 14 des (nicht eingeschalteten) Laserstrahls 15 durch das Zentrum der Aufnahmeöffnung 13 an der Strahlaufnahme 12 verläuft. Die Abstandsregelung des Laserbearbeitungskopfes 68 und damit u. a. der Stellantrieb 72, wird außer Funktion gesetzt: Das damit unveränderliche Niveau des Laserbearbeitungskopfes 68 bzw. der Laserdüse 69 bildet das Bezugsniveau für die sich anschließende Abstandsmessung.

Bei dem Abstandswert Null des Abstandes zwischen der Werkstückauflage 8 und der Strahlaufnahme 12 wird mittels der kapazitiven Messeinrichtung 71 der Abstand zwischen dem Laserbearbeitungskopf 68 bzw. der Laserdüse 69 und dem Blech 52 ermittelt (Figur 13).

Anschließend wird durch Betätigen des Antriebsmotors 19 der Baugruppe II die Werkstückauflage 8 in positiver z-Richtung gegenüber der an dem Anschlag 37 abgestützten Strahlaufnahme 12 zugestellt. Bei dieser Zustellbewegung wird fortlaufend der Abstand zwischen dem Laserbearbeitungskopf 68 bzw. der Laserdüse 69 und dem Blech 52 bestimmt. Aufgrund der Relativbewegung von Werkstückauflage 8 und Strahlaufnahme 12 kann sich das Blech 52 über der Strahlaufnahme 12 durchbiegen. Infolgedessen bleibt der fortlaufend gemessene Abstand zwischen der Laserdüse 69 und dem Blech 52 bei der gegenseitigen Zustellbewegung von Werkstückauflage 8 und Strahlaufnahme 12 zunächst unverändert. Hat das Blech 52 seine maximale Durchbiegung erreicht, so führt eine fortgesetzte gegenseitige Zustellbewegung von Werkstückauflage 8 und Strahlaufnahme 12 dazu, dass das Blech 52 über der Strahlaufnahme 12 angehoben wird und sich dementsprechend der gemessene Abstand zwischen der Laserdüse 69 und dem Blech 52 verringert. Figur 14 stellt denjenigen Zeitpunkt dar, zu welchem das Blech 52 gerade seine maximale Durchbiegung erreicht hat.

Die erstmalige Feststellung einer Änderung des Abstandes zwischen der Laserdüse 69 und dem Blech 52 markiert denjenigen Zeitpunkt, zu welchem sich das Blech 52 gerade nicht mehr mit der Strahlaufnahme 12 in Kontakt befindet. Der Abstandswert des zu diesem Zeitpunkt bestehenden Abstandes zwischen der Werkstückauflage 8 und der Strahlaufnahme 12 wird erfasst. Bei diesem Abstandswert handelt es sich um denjenigen Wert, der mindestens eingestellt werden muss, um bei der anschließenden Werkstückbearbeitung einen Kontakt zwischen dem Blech 52 und der Strahlaufnahme 12 sowie eine damit verbundene Kratzerbildung an dem Blech 52 zu vermeiden. Der Vorsorge halber kann der letzten Endes eingestellte Abstandswert etwas größer, beispielsweise 0,2 Millimeter größer bemessen werden als der zuvor bestimmte minimale Abstandswert. Die Verhältnisse bei dem letztlich eingestellten Abstandswert sind in Figur 15 veranschaulicht. Das Blech 52 weist an seiner Unterseite einen hinreichend sicheren Abstand von der Strahlaufnahme 12 auf.

Für die sich nun anschließende Werkstückbearbeitung wird die Abstandsregelung, das heißt unter anderem auch der Stellantrieb 72 für den Laserbearbeitungskopf 68 bzw. die Laserdüse 69 zugeschaltet. Bei Relativbewegungen des Bleches 52 und der Laserdüse 69 wird daher mittels der Einrichtung 70 zur Fokuslageneinstellung der Abstand zwischen der Laserdüse 69 und dem Blech 52 konstant gehalten. Dies geschieht durch entsprechende Ansteuerung des Stellantriebes 72 für den Laserbearbeitungskopf 68.

Bei Unebenheiten des Bleches 52 werden von dem Laserbearbeitungskopf 68 Ausgleichsbewegungen in z-Richtung ausgeführt. Diese Ausgleichsbewegungen können als Grundlage für die Steuerung des Antriebsmotors 19 der Baugruppe II dienen. Wird der Antriebsmotor 19 durch die numerische Antriebssteuerung 64 derart angesteuert, dass die Werkstückauflage 8 und die Strahlaufnahme 12 zeitgleich mit Ausgleichsbewegungen des Laserbearbeitungskopfes 68 entsprechende gegenseitige Zustellbewegungen ausführen, so kann der vor Beginn der Werkstückbearbeitung eingestellte Abstandswert für den Abstand zwischen der Werkstückauflage 8 und der Strahlaufnahme 12 während der gesamten bearbeitungsbedingten Relativbewegung von Blech 52 und Strahlaufnahme 12 beibehalten werden.

Sowohl die Antriebssteuerung 64 des Antriebsmotors 19 als auch die Steuerung des Stellantriebes 72 sind in eine programmierbare Steuerung der Laserbearbeitungsmaschine 1 integriert. Die Steuerungsprogramme werden mittels rechnergestützter Programmiersysteme generiert und anschließend in die numerische Steuerung der Laserbearbeitungsmaschine 1 eingespielt.

## Patentansprüche

1. Laserbearbeitungsmaschine zum Bearbeiten von Werkstücken (52), insbesondere von Blechen, unter Durchdringen eines zu bearbeitenden Werkstückes (52) mittels eines Laserstrahls (15),
• mit einer Werkstückauflage (8) zum Lagern eines Werkstückes (52),
• mit einem Laserbearbeitungskopf (68) und einer mit einer Aufnahmeöffnung (13) versehenen Strahlaufnahme (12) für den Laserstrahl (15) sowie
• mit einer Stelleinrichtung (53),
wobei der Laserbearbeitungskopf (68) auf der einen und die Werkstückauflage (8) sowie die Strahlaufnahme (12) auf der gegenüberliegenden Seite des Werkstückes (52) angeordnet sind und der Laserstrahl (15) von dem Laserbearbeitungskopf (68) her nach Durchdringen des Werkstückes (52) in die Aufnahmeöffnung (13) der Strahlaufnahme (12) eintaucht und wobei mittels der Stelleinrichtung (53) der entlang der Strahlachse (14) des in die Strahlaufnahme (12) eintauchenden Laserstrahls (15) bestehende Abstand zwischen dem Werkstück (52) und der Strahlaufnahme (12) variierbar ist, indem die Werkstückauflage (8) und die Strahlaufnahme (12) mittels einer von einer Antriebssteuerung (64) austeuerbaren Stellantriebes (18) der Stelleinrichtung (53) mit einer Stellbewegung entlang der Strahlachse (14) des Laserstrahls (15) relativ zueinander zustellbar sind,
**dadurch gekennzeichnet, dass**
der Abstand zwischen dem Werkstück (52) und der Strahlaufnahme (12) variierbar ist, indem der Stellantrieb (18) der Stelleinrichtung (53) mittels der Antriebssteuerung (64) derart ansteuerbar ist, dass mittels des Stellantriebes (18) die Werkstückauflage (8) und die Strahlaufnahme (12) entlang der Strahlachse (14) des Laserstrahls (15) relativ zueinander mit einer Stellbewegung zustellbar sind, deren Betrag variabel definierbar ist.

2. Laserbearbeitungsmaschine nach Anspruch 1, **dadurch gekennzeichnet, dass** der Abstand zwischen dem Werkstück (52) und der Strahlaufnahme (12) auf unterschiedliche, jeweils einer Bearbeitungsphase der Werkstückbearbeitung zugeordnete Abstandswerte einstellbar ist, indem der Stellantrieb (18) der Stelleinrichtung (53) mittels der Antriebssteuerung (64) derart ansteuerbar ist, dass mittels des Stellantriebes (18) die Werkstückauflage (8) und die Strahlaufnahme (12) entlang der Strahlachse (14) des Laserstrahls (15) mit einer Stellbewegung mit einem entsprechenden Betrag relativ zueinander zustellbar sind.

3. Laserbearbeitungsmaschine nach einem der vorhergehenden Ansprüche, **dadurch gekennzeichnet, dass** das Werkstück (52) und die Strahlaufnahme (12) bei ausgeschaltetem Laserstrahl (15) mit einer Positionierbewegung relativ zueinander parallel zu einer an der Werkstückauflage (8) ausgebildeten Auflageebene (51) bewegbar sind und dass der Abstand zwischen dem Werkstück (52) und der Strahlaufnahme (12) auf einen Abstandswert für die Positionierbewegung einstellbar ist, indem der Stellantrieb (18) der Stelleinrichtung (53) mittels der Antriebssteuerung (64) derart ansteuerbar ist, dass mittels des Stellantriebes (18) die Werkstückauflage (8) und die Strahlaufnahme (12) entlang der Strahlachse (14) des Laserstrahls (15) mit einer Stellbewegung mit einem entsprechenden Betrag relativ zueinander zustellbar sind.

4. Laserbearbeitungsmaschine nach einem der vorhergehenden Ansprüche, **dadurch gekennzeichnet, dass** das Werkstück (52) und die Strahlaufnahme (12) bei eingeschaltetem Laserstrahl (15) mit einer Bearbeitungsbewegung relativ zueinander parallel zu einer an der Werkstückauflage (8) ausgebildeten Auflageebene (51) bewegbar sind und dass der Abstand zwischen dem Werkstück (8) und der Strahlaufnahme (12) auf einen Abstandswert für die Bearbeitungsbewegung einstellbar ist, indem der Stellantrieb (18) der Stelleinrichtung (53) mittels der Antriebssteuerung (64) derart ansteuerbar ist, dass mittels des Stellantriebes (18) die Werkstückauflage (8) und die Strahlaufnahme (12) entlang der Strahlachse (14) des Laserstrahls (15) mit einer Stellbewegung mit einem entsprechenden Betrag relativ zueinander zustellbar sind.

5. Laserbearbeitungsmaschine nach den Ansprüchen 3 und 4, **dadurch gekennzeichnet, dass** der Abstand zwischen dem Werkstück (52) und der Strahlaufnahme (12) für eine Positionierbewegung auf einen größeren Abstandswert einstellbar ist als für eine Bearbeitungsbewegung.

6. Laserbearbeitungsmaschine nach einem der vorhergehenden Ansprüche, **dadurch gekennzeichnet, dass** das Werkstück (52) bei einem gemeinsamen Bewegungszustand, insbesondere bei einem gemeinsamen Ruhen, von Werkstück (52) und Strahlaufnahme (12) mittels des Laserstrahls (15) bearbeitbar ist und dass der Abstand zwischen dem Werkstück (52) und der Strahlaufnahme (12) auf einen dem gemeinsamen Bewegungszustand von Werkstück (52) und Strahlaufnahme (12) zugeordneten Abstandswert, insbesondere auf den Abstandswert Null, einstellbar ist, indem der Stellantrieb (18) der Stelleinrichtung (53) mittels der Antriebssteuerung (64) derart ansteuerbar ist, dass mittels des Stellantriebes (18) die Werkstückauflage (8) und die Strahlaufnahme (12) entlang der Strahlachse (14) des Laserstrahls (15) mit einer Stellbewegung mit einem entsprechenden Betrag relativ zueinander zustellbar sind.

7. Laserbearbeitungsmaschine nach einem der vorhergehenden Ansprüche, **dadurch gekennzeichnet, dass** der Abstand zwischen dem Werkstück (52) und der Strahlaufnahme (12) auf einen dem Werkstoff des Werkstückes (52) zugeordneten Abstandswert einstellbar ist, indem der Stellantrieb (18) der Stelleinrichtung (53) mittels der Antriebssteuerung (64) derart ansteuerbar ist, dass mittels des Stellantriebes (18) die Werkstückauflage (8) und die Strahlaufnahme (12) entlang der Strahlachse (14) des Laserstrahls (15) mit einer Stellbewegung mit einem entsprechenden Betrag relativ zueinander zustellbar sind.

8. Laserbearbeitungsmaschine nach einem der vorhergehenden Ansprüche insbesondere zur Bearbeitung von plattenartigen Werkstücken (52), vorzugsweise von Blechen, **dadurch gekennzeichnet, dass** der Abstand zwischen dem Werkstück (52) und der Strahlaufnahme (12) auf einen der Dicke des Werkstückes (52) zugeordneten Abstandswert einstellbar ist, indem der Stellantrieb (18) der Stelleinrichtung (53) mittels der Antriebssteuerung (64) derart ansteuerbar ist, dass mittels des Stellantriebes (18) die Werkstückauflage (8) und die Strahlaufnahme (12) entlang der Strahlachse (14) des Laserstrahls (15) mit einer Stellbewegung mit einem entsprechenden Betrag relativ zueinander zustellbar sind.

9. Laserbearbeitungsmaschine nach einem der vorhergehenden Ansprüche, **dadurch gekennzeichnet, dass** der Stellantrieb (18) der Stelleinrichtung (53) mittels der Antriebssteüerüng (64) derart ansteuerbar ist, dass während der Dauer zumindest einer Bearbeitungsphase der Werkstückbearbeitung der Abstand zwischen dem Werkstück (52) und der Strahlaufnahme (12) durch entsprechendes gegenseitiges Zustellen der Werkstückauflage (8) und der Strahlaufnahme (12) entlang der Strahlachse (14) des Laserstrahls (15) auf einem konstanten Abstandswert haltbar ist.

10. Laserbearbeitungsmaschine nach einem der vorhergehenden Ansprüche, **dadurch gekennzeichnet, dass** die Antriebssteuerung (64) des Stellantriebes (18) zur Einstellung des Abstandes zwischen dem Werkstück (52) und der Strahlaufnahme (12) wenigstens teilweise gebildet wird von einer Antriebssteuerung eines Stellantriebes (72) zur Einstellung des gegenseitigen Abstandes zwischen dem Laserbearbeitungskopf (68) und dem Werkstück (52).

11. Laserbearbeitungsmaschine nach einem der vorhergehenden Ansprüche, **dadurch gekennzeichnet, dass** die Antriebssteuerung (64) des Stellantriebes (18) als numerische Steuerung ausgebildet ist und dass der Abstand zwischen dem Werkstück (52) und der Strahlaufnahme (12) mittels des Stellantriebes (18) der Stelleinrichtung (53) auf wenigstens einen empirisch ermittelten Abstandswert einstellbar ist, der in einem Speicher der numerischen Antriebssteuerung (64) des Stellantriebes (18) der Stelleinrichtung (53) hinterlegt ist.

12. Laserbearbeitungsmaschine nach einem der vorhergehenden Ansprüche, **dadurch gekennzeichnet, dass** eine Einrichtung (70) zur Bestimmung eines für den Abstand zwischen dem Werkstück (52) und der Strahlaufnahme (12) einzustellenden Abstandswertes vorgesehen ist und dass der Stellantrieb (18) der Stelleinrichtung (53) mittels der Antriebssteuerung (64) derart ansteuerbar ist, dass mittels des Stellantriebes (18) der Abstand zwischen dem Werkstück (52) und der Strahlaufnahme (12) auf diesen Abstandswert einstellbar ist.

13. Laserbearbeitungsmaschine nach Ansprüch 12, **dadurch gekennzeichnet, dass** die Einrichtung (70) zur Bestimmung eines für den Abstand zwischen dem Werkstück (52) und der Strahlaufnahme (12) einzustellenden Abstandswertes wenigstens teilweise gebildet wird von einer Einrichtung (70) zur Bestimmung des entlang der Strahlachse (14) des Laserstrahls (15) bestehenden Abstandes zwischen dem Laserbearbeitungskopf (68) und dem Werkstück (52).

14. Laserbearbeitungsmaschine nach einem der vorhergehenden Ansprüche, **dadurch gekennzeichnet, dass** der Stellantrieb (18) der Stelleinrichtung (53) zum gegenseitigen Zustellen der Werkstückauflage (8) und der Strahlaufnahme (12) einen Stellantriebsmotor (19) umfasst, mittels dessen die Werkstückauflage (8) bei entlang der Strahlachse (14) des Laserstrahls (15) ortsfester Strahlaufnahme (12) relativ zu der Strahlaufnahme (12) zustellbar ist oder mittels dessen die Strahlaufnahme (12) bei entlang der Strahlachse (14) des Laserstrahls (15) ortsfester Werkstückauflage (8) relativ zu der Werkstückauflage (8) entlang der Strahlachse (14) des Laserstrahls (15) zustellbar ist.

15. Laserbearbeitungsmaschine nach einem der vorhergehenden Ansprüche, **dadurch gekennzeichnet, dass** der Stellantrieb (18) der Stelleinrichtung (53) zum gegenseitigen Zustellen der Werkstückauflage (8) und der Strahlaufnahme (12) von einem Ausschleus- und Stellantrieb gebildet wird, mittels dessen außerdem die Werkstückauflage (8) und/oder die Strahlaufnahme (12) zum Ausschleusen von Produkten der Werkstückbearbeitung entlang der Strahlachse (14) des Laserstrahls (15) bewegbar ist.

16. Laserbearbeitungsmaschine nach Ansprüch 15, sprüche, **dadurch gekennzeichnet, dass** zum Ausschleusen von Produkten der Werkstückbearbeitung die Werkstückauflage (8) und die Strahlaufnahme (12) mittels des Ausschleus- und Stellantriebes gemeinschaftlich entlang der Strahlachse (14) des Laserstrahls (15) bewegbar sind und dass zum gegenseitigen Zustellen der Werkstückauflage (8) und der Strahlaufnahme (12) die Werkstückauflage (8) bei in Bewegungsrichtung der Werkstückauflage (8) bewegungsgehemmter, insbesondere blockierter Strahlaufnahme (12) relativ zu der Strahlaufnahme (12) oder die Strahlaufnahme (12) bei in Bewegungsrichtung der Strahlaufnahme (12) bewegungsgehemmter, insbesondere blockierter Werkstückauflage (8) relativ zu der Werkstückauflage (8) entlang der Strahlachse (14) des Laserstrahls (15) zustellbar ist.

17. Laserbearbeitungsmaschine nach einem der vorhergehenden Ansprüche, **dadurch gekennzeichnet, dass** zum Blockieren der Strahlaufnahme (12) oder der Werkstückauflage (8) beim gegenseitigen Zustellen der Werkstückauflage (8) und der Strahlaufnahme (12) ein in Richtung der Zustellbewegung wirksamer Anschlag (37) für die Strahlaufnahme (12) oder die Werkstückauflage (8) vorgesehen ist.

18. Laserbearbeitungsmaschine nach Ansprüch 17, **dadurch gekennzeichnet, dass** der Anschlag (37) für die Strahlaufnahme (12) oder die Werkstückauflage (8) in Richtung der gegenseitigen Zustellbewegung der Werkstückauflage (8) und der Strahlaufnahme (12) in unterschiedliche Positionen einstellbar ist.

19. Maschinelles Verfahren zum Bearbeiten von Werkstücken (52), insbesondere von Blechen, unter Durchdringen eines zu bearbeitenden Werkstückes (52) mittels eines Laserstrahls (15),
• wobei das Werkstück (52) auf einer Werkstückauflage (8) gelagert wird,
• wobei ein Laserbearbeitungskopf (68) auf der einen und eine mit einer Aufnahmeöffnung (13) versehene Strahlaufnahme (12) auf der gegenüberliegenden, der Werkstückauflage (8) zugeordneten Seite des Werkstückes (52) angeordnet werden,
• wobei der Laserstrahl (15) von dem Laserbearbeitungskopf (68) her nach Durchdringen des Werkstückes (52) in die Aufnahmeöffnung (13) der Strahlaufnahme (12) eintaucht und
• wobei mittels einer Stelleinrichtung (53) der entlang der Strahlachse (14) des in die Strahlaufnahme (12) eintauchenden Laserstrahls (15) bestehende Abstand zwischen dem Werkstück (52) und der Strahlaufnahme (12) variiert wird, indem die Werkstückauflage (8) und die Strahlaufnahme (12) mittels eines von einer Antriebssteuerung (64) gesteuerten Stellantriebes (18) der Stelleinrichtung (53) mit einer Stellbewegung entlang der Strahlachse (14) des Laserstrahls (15) relativ zueinander zugestellt werden,
**dadurch gekennzeichnet, dass**
der Abstand zwischen dem Werkstück (52) und der Strahlaufnahme (12) variiert wird, indem die Antriebssteuerung (64) den Stellantrieb (18) der Stelleinrichtung (53) derart steuert, dass der Stellantrieb (18) die Werkstückauflage (8) und die Strahlaufnahme (12) entlang der Strahlachse (14) des Laserstrahls (15) mit einer Stellbewegung relativ zueinander zustellt deren Betrag variabel definiert wird.

20. Maschinelles Verfahren nach Anspruch 19, **dadurch gekennzeichnet dass** der Abstand zwischen dem Werkstück (52) und der Strahlaufnahme (12) auf unterschiedliche, jeweils einer Bearbeitungsphase der Werkstückbearbeitung zugeordnete Abstandswerte eingestellt wird, indem die Antriebssteuerung (64) den Stellantrieb (18) der Stelleinrichtung (53) derart steuert, dass der Stellantrieb (18) die Werkstückauflage (8) und die Strahlaufnahme (12) entlang der Strahlachse (14) des Laserstrahls (15) mit einer Stellbewegung mit einem entsprechenden Betrag relativ zueinander zustellt.

21. Maschinelles Verfahren nach Anspruch 19 oder Anspruch 20, **dadurch gekennzeichnet, dass** der Abstand zwischen dem Werkstück (52) und der Strahlaufnahme (12) auf einen dem Werkstoff des Werkstückes (52) zugeordneten Abstandswert eingestellt wird, indem die Antriebssteuerung (64) den Stellantrieb (18) der Stelleinrichtung (53) derart steuert, dass der Stellantrieb (18) die Werkstückauflage (8) und die Strahlaufnahme (12) entlang der Strahlachse (14) des Laserstrahls (15) mit einer Stellbewegung mit einem entsprechenden Betrag relativ zueinander zustellt.

22. Maschinelles Verfahren nach einem der Ansprüche 19 bis 21 insbesondere zum Bearbeiten von plattenartigen Werkstücken (52), vorzugsweise von Blechen, **dadurch gekennzeichnet, dass** der Abstand zwischen dem Werkstück (52) und der Strahlaufnahme (12) auf einen der Dicke des Werkstückes (52) zugeordneten Abstandswert eingestellt wird, indem die Antriebssteuerung (64) den Stellantrieb (18) der Stelleinrichtung (53) derart steuert, dass der Stellantrieb (18) die Werkstückauflage (8) und die Strahlaufnahme (12) entlang der Strahlachse (14) des Laserstrahls (15) mit einer Stellbewegung mit einem entsprechenden Betrag relativ zueinander zustellt.

23. Maschinelles Verfahren nach einem der Ansprüche 19 bis 22, **dadurch gekennzeichnet, dass** der Abstand zwischen dem Werkstück (52) und der Strahlaufnahme (12) während der Dauer zumindest einer Bearbeitungsphase der Werkstückbearbeitung konstant auf einem eingestellten Abstandswert gehalten wird, indem die Antriebssteuerung (64) den Stellantrieb (18) der Stelleinrichtung (53) derart steuert, dass der Stellantrieb (18) die Werkstückauflage (8) und die Strahlaufnahme (12) triebes (18) der Stelleinrichtung (53) entlang der Strahlachse (14) des Laserstrahls (15) mit einer Stellbewegung mit einem entsprechenden Betrag relativ zueinander zugestellt werden.

24. Maschinelles Verfahren nach einem der Ansprüche 19 bis 23, **dadurch gekennzeichnet, dass** als Antriebssteuerung (64) eine numerische Antriebssteuerung (64) vorgesehen wird, dass ein Abstandswert für den Abstand zwischen dem Werkstück (52) und der Strahlaufnahme (12) empirisch ermittelt und in einem Speicher der numerischen Antriebssteuerung (64) des Stellantriebes (18) der Stelleinrichtung (53) hinterlegt wird und dass der Abstand zwischen dem Werkstück (52) und der Strahlaufnahme (12) auf diesen Abstandswert eingestellt wird.

25. Maschinelles Verfahren nach einem der Ansprüche 19 bis 24, **dadurch gekennzeichnet, dass** ein einzustellender Abstandswert für den Abstand zwischen dem Werkstück (52) und der Strahlaufnahme (12) an dem zu bearbeitenden Werkstück (52) bestimmt wird und dass der Abstand zwischen dem Werkstück (52) und der Strahlaufnahme (12) auf diesen Abstandswert eingestellt wird.

26. Maschinelles Verfahren nach Anspruch 25 insbesondere zum Bearbeiten von plattenartigen Werkstücken (52), vorzugsweise von Blechen, **dadurch gekennzeichnet, dass** ein einzustellender Abstandswert für den Abstand zwischen dem Werkstück (52) und der Strahlaufnahme (12) an dem zu bearbeitenden Werkstück (52) nach einem Bestimmungsverfahren mit folgenden Verfahrensschritten bestimmt wird:
• die Werkstückauflage (8) und die Strahlaufnahme (12) werden in Richtung der Strahlachse (14) des Laserstrahls (15) relativ zueinander auf einen gegenseitigen Abstand mit dem Abstandswert Null zugestellt,
• bei auf der Werkstückauflage (8) und auf der Strahlaufnahme (12) gelagertem Werkstück (52) werden die Werkstückauflage (8) und die Strahlaufnahme (12) ausgehend von dem gegenseitigen Abstand mit dem Abstandswert Null unter Entfernen der Strahlaufnahme (12) von dem Werkstück (52) relativ zueinander in Richtung der Strahlachse (14) des Laserstrahls (15) zugestellt,
• während des gegenseitigen Zustellens der Werkstückauflage (8) und der Strahlaufnahme (12) unter Entfernen der Strahlaufnahme (12) von dem Werkstück (52) wird der Zeitpunkt ermittelt, zu welchem das Werkstück (52) über der Strahlaufnahme (12) seine maximale Durchbiegung erreicht,
• ab dem Zeitpunkt, zu welchem das Werkstück (52) über der Strahlaufnahme (12) seine maximale Durchbiegung erreicht, wird der Ist-Wert des gegenseitigen Abstandes der Werkstückauflage (8) und der Strahlaufnahme (12) ermittelt,
• auf der Grundlage des ermittelten Ist-Wertes wird der einzustellende Abstandswert für den Abstand zwischen dem Werkstück (52) und der Strahlaufnahme (12) bestimmt.

27. Maschinelles Verfahren nach Anspruch 26, **dadurch gekennzeichnet, dass** die maximale Durchbiegung des Werkstückes (52) über der Strahlaufnahme (12) festgestellt wird auf der Grundlage des entlang der Strahlachse (14) des Laserstrahls (15) bestehenden Abstandes zwischen einem Bezugsniveau und dem Werkstück (52) über der Strahlaufnahme (12).

28. Bearbeitungsprogramm zum Betreiben einer Laserbearbeitungsmaschine (1) nach einem der Ansprüche 1 bis 18, **gekennzeichnet durch** Steuerbefehle für den Stellantrieb (18) der Stelleinrichtung (53) und/oder für die Einrichtung (70) zur Bestimmung eines einzustellenden Abstandswertes für den Abstand zwischen dem Werkstück (52) und der Strahlaufnahme (12), welche bewirken, dass ein maschinelles Verfahren nach einem der Ansprüche 19 bis 27 durchgeführt wird, wenn das Bearbeitungsprogramm auf einer numerischen Steuerung der Laserbearbeitungsmaschine (1) abläuft.

29. Verfahren zum Erstellen eines Bearbeitungsprogramms nach Anspruch 28, **dadurch gekennzeichnet, dass** Steuerbefehle für den Stellantrieb (18) der Stelleinrichtung (53) und/oder für die Einrichtung (70) zur Bestimmung eines einzustellenden Abstandswertes für den Abstand zwischen dem Werkstück (52) und der Strahlaufnahme (12) erzeugt werden, welche bewirken, dass ein maschinelles Verfahren nach einem der Ansprüche 19 bis 27 durchgeführt wird, wenn das Bearbeitungsprogramm auf einer numerischen Steuerung der Laserbearbeitungsmaschine (1) abläuft.

30. Computerprogrammprodukt, welches Kodierungsmittel aufweist, die zum Durchführen aller Schritte des Verfahrens nach Anspruch 29 angepasst sind, wenn das Computerprogrammprodukt auf einer Datenverarbeitungsanlage betrieben wird.

## Claims

1. Laser processing machine for processing workpieces (52), in particular metal sheets, with penetration of a workpiece (52) to be processed by means of a laser beam (15),
• having a workpiece support (8) for supporting a workpiece (52),
• having a laser processing head (68) and a beam receiving member (12) which is provided with a receiving opening (13) for the laser beam (15) and
• having a positioning device (53),
the laser processing head (68) being arranged at one side and the workpiece support (8) and the beam receiving member (12) being arranged at the opposite side of the workpiece (52) and the laser beam (15) entering the receiving opening (13) of the beam receiving member (12) from the laser processing head (68) after the workpiece (52) has been penetrated, and the spacing which exists along the beam axis (14) of the laser beam (15) entering the beam receiving member (12) between the workpiece (52) and the beam receiving member (12) being able to be varied by means of the positioning device (53) by the workpiece support (8) and the beam receiving member (12) being able to be positioned relative to each other by means of a positioning drive (18) of the positioning device (53) with a positioning movement along the beam axis (14) of the laser beam (15), which positioning drive (18) can be controlled by a drive control unit (64),
**characterised in that**
the spacing between the workpiece (52) and the beam receiving member (12) can be varied by the positioning drive (18) of the positioning device (53) being controllable by means of the drive control unit (64) in such a manner that, by means of the positioning drive (18), the workpiece support (8) and the beam receiving member (12) can be positioned relative to each other with a positioning movement, whose magnitude can be defined in a variable manner, along the beam axis (14) of the laser beam (15).

2. Laser processing machine according to claim 1, **characterised in that** the spacing between the workpiece (52) and the beam receiving member (12) can be adjusted to different spacing values which are each assigned to a processing phase of the workpiece processing operation by the positioning drive (18) of the positioning device (53) being controllable by means of the drive control unit (64) in such a manner that, by means of the positioning drive (18), the workpiece support (8) and the beam receiving member (12) can be positioned relative to each other along the beam axis (14) of the laser beam (15) with a positioning movement having a corresponding magnitude.

3. Laser processing machine according to either of the preceding claims, **characterised in that** the workpiece (52) and the beam receiving member (12) are movable, when the laser beam (15) is switched off, with a positioning movement relative to each other parallel with a support plane (51) which is defined on the workpiece support (8), and **in that** the spacing between the workpiece (52) and the beam receiving member (12) can be adjusted to a spacing value for the positioning movement by the positioning drive (18) of the positioning device (53) being controllable by means of the drive control unit (64) in such a manner that, by means of the positioning drive (18), the workpiece support (8) and the beam receiving member (12) can be positioned relative to each other along the beam axis (14) of the laser beam (15) with a positioning movement having a corresponding magnitude.

4. Laser processing machine according to any one of the preceding claims, **characterised in that** the workpiece (52) and the beam receiving member (12) are movable, when the laser beam (15) is switched on, with a processing movement relative to each other parallel with a support plane (51) which is defined on the workpiece support (8), and **in that** the spacing between the workpiece (52) and the beam receiving member (12) can be adjusted to a spacing value for the processing movement by the positioning drive (18) of the positioning device (53) being controllable by means of the drive control unit (64) in such a manner that, by means of the positioning drive (18), the workpiece support (8) and the beam receiving member (12) can be positioned relative to each other along the beam axis (14) of the laser beam (15) with a positioning movement having a corresponding magnitude.

5. Laser processing machine according to claims 3 and 4, **characterised in that** the spacing between the workpiece (52) and the beam receiving member (12) can be adjusted for a positioning movement to a greater spacing value than for a processing movement.

6. Laser processing machine according to any one of the preceding claims, **characterised in that** the workpiece (52) can be processed by means of the laser beam (15) in a common movement state, in particular in a common rest state, of the workpiece (52) and the beam receiving member (12), and **in that** the spacing between the workpiece (52) and the beam receiving member (12) can be adjusted to a spacing value, in particular to the spacing value zero, which is assigned to the common movement state of the workpiece (52) and the beam receiving member (12), by the positioning drive (18) of the positioning device (53) being controllable by means of the drive control unit (64) in such a manner that, by means of the positioning drive (18), the workpiece support (8) and the beam receiving member (12) can be positioned relative to each other along the beam axis (14) of the laser beam (15) with a positioning movement having a corresponding magnitude.

7. Laser processing machine according to any one of the preceding claims, **characterised in that** the spacing between the workpiece (52) and the beam receiving member (12) can be adjusted to a spacing value which is assigned to the material of the workpiece (52) by the positioning drive (18) of the positioning device (53) being controllable by means of the drive control unit (64) in such a manner that, by means of the positioning drive (18), the workpiece support (8) and the beam receiving member (12) can be positioned relative to each other along the beam axis (14) of the laser beam (15) with a positioning movement having a corresponding magnitude.

8. Laser processing machine according to any one of the preceding claims, in particular for processing plate-like workpieces (52), preferably metal sheets, **characterised in that** the spacing between the workpiece (52) and the beam receiving member (12) can be adjusted to a spacing value which is assigned to the thickness of the workpiece (52) by the positioning drive (18) of the positioning device (53) being controllable by means of the drive control unit (64) in such a manner that, by means of the positioning drive (18), the workpiece support (8) and the beam receiving member (12) can be positioned relative to each other along the beam axis (14) of the laser beam (15) with a positioning movement having a corresponding magnitude.

9. Laser processing machine according to any one of the preceding claims, **characterised in that** the positioning drive (18) of the positioning device (53) can be controlled by means of the drive control unit (64) in such a manner that the spacing between the workpiece (52) and the beam receiving member (12) can be maintained at a constant spacing value for the duration of at least one processing phase of the workpiece processing operation by corresponding mutual positioning of the workpiece support (8) and the beam receiving member (12) along the beam axis (14) of the laser beam (15).

10. Laser processing machine according to any one of the preceding claims, **characterised in that** the drive control unit (64) of the positioning drive (18) for adjusting the spacing between the workpiece (52) and the beam receiving member (12) is at least partially formed by a drive control unit of a positioning drive (72) that is provided for adjusting the mutual spacing between the laser processing head (68) and the workpiece (52).

11. Laser processing machine according to any one of the preceding claims, **characterised in that** the drive control unit (64) of the positioning drive (18) is in the form of a numerical control and **in that** the spacing between the workpiece (52) and the beam receiving member (12) can be adjusted by means of the positioning drive (18) of the positioning device (53) to at least one empirically established spacing value which is stored in a store of the numerical drive control unit (64) of the positioning drive (18) of the positioning device (53).

12. Laser processing machine according to any one of the preceding claims, **characterised in that** there is provided a device (70) for establishing a spacing value which is intended to be adjusted for the spacing between the workpiece (52) and the beam receiving member (12), and **in that**, by the positioning drive (18) of the positioning device (53) being controllable by means of the drive control unit (64) in such a manner that, by means of the positioning drive (18), the spacing between the workpiece (52) and the beam receiving member (12) can be adjusted to this spacing value.

13. Laser processing machine according to claim 12, **characterised in that** the device (70) for establishing a spacing value which is intended to be adjusted for the spacing between the workpiece (52) and the beam receiving member (12) is at least partially formed by a device (70) for establishing the spacing existing along the beam axis (14) of the laser beam (15) between the laser processing head (68) and the workpiece (52).

14. Laser processing machine according to any one of the preceding claims, **characterised in that** the positioning drive (18) of the positioning device (53) for mutually positioning the workpiece support (8) and the beam receiving member (12) comprises a positioning drive motor (19), by means of which the workpiece support (8) can be positioned relative to the beam receiving member (12) with the beam receiving member (12) being fixed in position along the beam axis (14) of the laser beam (15) or by means of which the beam receiving member (12) can be positioned relative to the workpiece support (8) along the beam axis (14) of the laser beam (15) with the workpiece support (8) being fixed in position along the beam axis (14) of the laser beam (15).

15. Laser processing machine according to any one of the preceding claims, **characterised in that** the positioning drive (18) of the positioning device (53) for mutually positioning the workpiece support (8) and the beam receiving member (12) is formed by a discharging and positioning drive, by means of which the workpiece support (8) and/or the beam receiving member (12) can further be moved along the beam axis (14) of the laser beam (15) in order to discharge products of the workpiece processing operation.

16. Laser processing machine according to claim 15, **characterised in that**, in order to discharge products of the workpiece processing operation, the workpiece support (8) and the beam receiving member (12) can be moved together along the beam axis (14) of the laser beam (15) by means of the discharging and positioning drive, and **in that**, in order to mutually position the workpiece support (8) and the beam receiving member (12), the workpiece support (8) can be positioned along the beam axis (14) of the laser beam (15) relative to the beam receiving member (12) with the beam receiving member (12) being inhibited in terms of movement, in particular blocked, in the movement direction of the workpiece support (8), or the beam receiving member (12) can be positioned along the beam axis (14) of the laser beam (15) relative to the workpiece support (8) with the workpiece support (8) being inhibited in terms of movement, in particular blocked, in the movement direction of the beam receiving member (12).

17. Laser processing machine according to any one of the preceding claims, **characterised in that** a stop (37) which is active in the direction of the positioning movement is provided for the beam receiving member (12) or the workpiece support (8) in order to block the beam receiving member (12) or the workpiece support (8) in the case of mutual positioning of the workpiece support (8) and the beam receiving member (12).

18. Laser processing machine according to claim 17, **characterised in that** the stop (37) for the beam receiving member (12) or the workpiece support (8) can be adjusted into different positions in the direction of the mutual positioning movement of the workpiece support (8) and the beam receiving member (12).

19. Mechanical method for processing workpieces (52), in particular metal sheets, with penetration of a workpiece (52) to be processed by means of a laser beam (15),
• the workpiece (52) being supported on a workpiece support (8),
• a laser processing head (68) being arranged at one side and a beam receiving member (12) provided with a receiving opening (13) being arranged at the opposite side of the workpiece (52) associated with the workpiece support (8),
• the laser beam (15) entering the receiving opening (13) of the beam receiving member (12) from the laser processing head (68) after the workpiece (52) has been penetrated and,
• by means of a positioning device (53), the spacing which exists along the beam axis (14) of the laser beam (15) entering the beam receiving member (12) between the workpiece (52) and the beam receiving member (12) being varied by the workpiece support (8) and the beam receiving member (12) being positioned relative to each other with a positioning movement along the beam axis (14) of the laser beam (15) by means of a positioning drive (18) of the positioning device (53), which positioning drive (18) is controlled by a drive control unit (64),
**characterised in that**
the spacing between the workpiece (52) and the beam receiving member (12) is varied by the drive control unit (64) controlling the positioning drive (18) of the positioning device (53) in such a manner that the positioning drive (18) positions the workpiece support (8) and the beam receiving member (12) relative to each other along the beam axis (14) of the laser beam (15) with a positioning movement whose magnitude is defined in a variable manner.

20. Mechanical method according to claim 19, **characterised in that** the spacing between the workpiece (52) and the beam receiving member (12) is adjusted to different spacing values each being assigned to a processing phase of the workpiece processing operation by the drive control unit (64) controlling the positioning drive (18) of the positioning device (53) in such a manner that the positioning drive (18) positions the workpiece support (8) and the beam receiving member (12) relative to each other along the beam axis (14) of the laser beam (15) with a positioning movement having a corresponding magnitude.

21. Mechanical method according to claim 19 or claim 20, **characterised in that** the spacing between the workpiece (52) and the beam receiving member (12) is adjusted to a spacing value assigned to the material of the workpiece (52) by the drive control unit (64) controlling the positioning drive (18) of the positioning device (53) in such a manner that the positioning drive (18) positions the workpiece support (8) and the beam receiving member (12) relative to each other along the beam axis (14) of the laser beam (15) with a positioning movement having a corresponding magnitude.

22. Mechanical method according to any one of claims 19 to 21, in particular for processing plate-like workpieces (52), preferably metal sheets, **characterised in that** the spacing between the workpiece (52) and the beam receiving member (12) is adjusted to a spacing value assigned to the thickness of the workpiece (52) by the drive control unit (64) controlling the positioning drive (18) of the positioning device (53) in such a manner that the positioning drive (18) positions the workpiece support (8) and the beam receiving member (12) relative to each other along the beam axis (14) of the laser beam (15) with a positioning movement having a corresponding magnitude.

23. Mechanical method according to any one of claims 19 to 22, **characterised in that** the spacing between the workpiece (52) and the beam receiving member (12) is kept in a constant state at an adjusted spacing value for the duration of at least one processing phase of the workpiece processing operation by the drive control unit (64) controlling the positioning drive (18) of the positioning device (53) in such a manner that the positioning drive (18) positions the workpiece support (8) and the beam receiving member (12) of the positioning device (53) relative to each other along the beam axis (14) of the laser beam (15) with a positioning movement having a corresponding magnitude.

24. Mechanical method according to any one of claims 19 to 23, **characterised in that** a numerical drive control unit (64) is provided as the drive control unit (64), **in that** a spacing value is empirically established for the spacing between the workpiece (52) and the beam receiving member (12) and is stored in a store of the numerical drive control unit (64) of the positioning drive (18) of the positioning device (53), and **in that** the spacing between the workpiece (52) and the beam receiving member (12) is adjusted to that spacing value.

25. Mechanical method according to any one of claims 19 to 24, **characterised in that** a spacing value to be adjusted for the spacing between the workpiece (52) and the beam receiving member (12) is established at the workpiece (52) to be processed, and **in that** the spacing between the workpiece (52) and the beam receiving member (12) is adjusted to that spacing value.

26. Mechanical method according to claim 25, in particular for processing plate-like workpieces (52), preferably metal sheets, **characterised in that** a spacing value to be adjusted for the spacing between the workpiece (52) and the beam receiving member (12) is established at the workpiece (52) to be processed according to an establishment method having the following method steps:
• the workpiece support (8) and the beam receiving member (12) are positioned relative to each other in the direction of the beam axis (14) of the laser beam (15) at a mutual spacing having the spacing value zero,
• when a workpiece (52) is supported on the workpiece support (8) and on the beam receiving member (12), the workpiece support (8) and the beam receiving member (12) are positioned relative to each other in the direction of the beam axis (14) of the laser beam (15) starting from the mutual spacing having the spacing value zero with the beam receiving member (12) moving away from the workpiece (52),
• the time at which the workpiece (52) reaches its maximum deflection above the beam receiving member (12) is established during the mutual positioning of the workpiece support (8) and the beam receiving member (12) with the beam receiving member (12) moving away from the workpiece (52),
• from the time at which the workpiece (52) reaches its maximum deflection above the beam receiving member (12), the actual value of the mutual spacing of the workpiece support (8) and the beam receiving member (12) is established,
• on the basis of the established actual value, the spacing value to be adjusted for the spacing between the workpiece (52) and the beam receiving member (12) is established.

27. Mechanical method according to claim 26, **characterised in that** the maximum deflection of the workpiece (52) above the beam receiving member (12) is established on the basis of the spacing existing along the beam axis (14) of the laser beam (15) between a reference level and the workpiece (52) above the beam receiving member (12).

28. Processing programme for operating a laser processing machine (1) according to any one of claims 1 to 18, **characterised by** control commands for the positioning drive (18) of the positioning device (53) and/or for the device (70) for establishing a spacing value to be adjusted for the spacing between the workpiece (52) and the beam receiving member (12), which control commands cause a mechanical method according to any one of claims 19 to 27 to be carried out when the processing programme is carried out on a numerical control unit of the laser processing machine (1).

29. Method for setting up a processing programme according to claim 28, **characterised in that** control commands are produced for the positioning drive (18) of the positioning device (53) and/or for the device (70) for establishing a spacing value to be adjusted for the spacing between the workpiece (52) and the beam receiving member (12), and cause a mechanical method according to any one of claims 19 to 27 to be carried out when the processing programme runs on a numerical control unit of the laser processing machine (1).

30. Computer programme product which has encoding means which are suitable for carrying out all the steps of the method according to claim 29 when the computer programme product is operated on a data processing system.

## Revendications

1. Machine d'usinage au laser pour l'usinage de pièces (52), en particulier de tôles, par pénétration d'une pièce à usiner (52) au moyen d'un rayon laser (15),
• avec un support de pièce (8) pour supporter une pièce (52),
• avec une tête d'usinage au laser (68) et un récepteur de rayon (12) pourvu d'une ouverture de réception (13) pour le rayon laser (15) et
• avec un dispositif de positionnement (53),
dans laquelle la tête d'usinage au laser (68) est disposée d'un côté et le support de pièce (8) ainsi que le récepteur de rayon (12) du côté opposé de la pièce (52) et le rayon laser (15) venant de la tête d'usinage au laser (68) plonge dans l'ouverture de réception (13) du récepteur de rayon (12) après avoir pénétré la pièce (52) et dans laquelle la distance existante entre la pièce (52) et le récepteur de rayon (12) le long de l'axe de rayon (14) du rayon laser (15) qui plonge dans le récepteur de rayon (12) est variable au moyen du dispositif de positionnement (53), le support de pièce (8) et le récepteur de rayon (12) pouvant être positionnés l'un par rapport à l'autre par un mouvement de positionnement le long de l'axe de rayon (14) du rayon laser (15) au moyen d'un actionneur de positionnement (18), pouvant être commandé par une commande d'entraînement (64), du dispositif de positionnement (53),
**caractérisée en ce que**
la distance entre la pièce (52) et le récepteur de rayon (12) est variable, l'actionneur de positionnement (18) du dispositif de positionnement (53) pouvant être commandé au moyen de la commande d'entraînement (64) de telle façon que le support de pièce (8) et le récepteur de rayon (12) puissent être positionnés l'un par rapport à l'autre le long de l'axe de rayon (14) du rayon laser (15) au moyen de l'actionneur de positionnement (18) par un mouvement de positionnement dont le montant peut être défini de manière variable.

2. Machine d'usinage au laser selon la revendication 1, **caractérisée en ce que** la distance entre la pièce (52) et le récepteur de rayon (12) est réglable à différentes valeurs de distance, associées chacune à une phase d'usinage de l'usinage de la pièce, l'actionneur de positionnement (18) du dispositif de positionnement (53) pouvant être commandé au moyen de la commande d'entraînement (64) de telle façon que le support de pièce (8) et le récepteur de rayon (12) puissent être positionnés l'un par rapport à l'autre le long de l'axe de rayon (14) du rayon laser (15) au moyen de l'actionneur de positionnement (18) par un mouvement de positionnement d'un montant correspondant.

3. Machine d'usinage au laser selon une des revendications précédentes, **caractérisée en ce que**, quand le rayon laser (15) est désactivé, la pièce (52) et le récepteur de rayon (12) sont déplaçables l'un par rapport à l'autre parallèlement à un plan de support (51) formé sur le support de pièce (8) par un mouvement de positionnement et que la distance entre la pièce (52) et le récepteur de rayon (12) est réglable à une valeur de distance pour le mouvement de positionnement, l'actionneur de positionnement (18) du dispositif de positionnement (53) pouvant être commandé au moyen de la commande d'entraînement (64) de telle façon que le support de pièce (8) et le récepteur de rayon (12) puissent être positionnés l'un par rapport à l'autre le long de l'axe de rayon (14) du rayon laser (15) au moyen de l'actionneur de positionnement (18) par un mouvement de positionnement d'un montant correspondant.

4. Machine d'usinage au laser selon une des revendications précédentes, **caractérisée en ce que**, quand le rayon laser (15) est activé, la pièce (52) et le récepteur de rayon (12) sont déplaçables l'un par rapport à l'autre parallèlement à un plan de support (51) formé sur le support de pièce (8) par un mouvement d'usinage et que la distance entre la pièce (8) et le récepteur de rayon (12) est réglable à une valeur de distance pour le mouvement d'usinage, l'actionneur de positionnement (18) du dispositif de positionnement (53) pouvant être commandé au moyen de la commande d'entraînement (64) de telle façon que le support de pièce (8) et le récepteur de rayon (12) puissent être positionnés l'un par rapport à l'autre le long de l'axe de rayon (14) du rayon laser (15) au moyen de l'actionneur de positionnement (18) par un mouvement de positionnement d'un montant correspondant.

5. Machine d'usinage au laser selon les revendications 3 et 4, **caractérisée en ce que** la distance entre la pièce (52) et le récepteur de rayon (12) est réglable à une plus grande valeur de distance pour un mouvement de positionnement que pour un mouvement d'usinage.

6. Machine d'usinage au laser selon une des revendications précédentes, **caractérisée en ce que** la pièce (52) peut être usinée au moyen du rayon laser (15) dans un état de mouvement commun, en particulier de repos commun, de la pièce (52) et du récepteur de rayon (12) et que la distance entre la pièce (52) et le récepteur de rayon (12) peut être réglée à une valeur de distance associée à l'état de mouvement commun de la pièce (52) et du récepteur de rayon (12), en particulier à la valeur de distance nulle, l'actionneur de positionnement (18) du dispositif de positionnement (53) pouvant être commandé au moyen de la commande d'entraînement (64) de telle façon que le support de pièce (8) et le récepteur de rayon (12) puissent être positionnés l'un par rapport à l'autre le long de l'axe de rayon (14) du rayon laser (15) au moyen de l'actionneur de positionnement (18) par un mouvement de positionnement d'un montant correspondant.

7. Machine d'usinage au laser selon une des revendications précédentes, **caractérisée en ce que** la distance entre la pièce (52) et le récepteur de rayon (12) est réglable à une valeur de distance associée au matériau de la pièce (52), l'actionneur de positionnement (18) du dispositif de positionnement (53) pouvant être commandé au moyen de la commande d'entraînement (64) de telle façon que le support de pièce (8) et le récepteur de rayon (12) puissent être positionnés l'un par rapport à l'autre le long de l'axe de rayon (14) du rayon laser (15) au moyen de l'actionneur de positionnement (18) par un mouvement de positionnement d'un montant correspondant.

8. Machine d'usinage au laser selon une des revendications précédentes, en particulier pour l'usinage de pièces (52) en forme de plaque, de préférence de tôles, **caractérisée en ce que** la distance entre la pièce (52) et le récepteur de rayon (12) est réglable à une valeur de distance associée à l'épaisseur de la pièce (52), l'actionneur de positionnement (18) du dispositif de positionnement (53) pouvant être commandé au moyen de la commande d'entraînement (64) de telle façon que le support de pièce (8) et le récepteur de rayon (12) puissent être positionnés l'un par rapport à l'autre le long de l'axe de rayon (14) du rayon laser (15) au moyen de l'actionneur de positionnement (18) par un mouvement de positionnement d'un montant correspondant.

9. Machine d'usinage au laser selon une des revendications précédentes, **caractérisée en ce que** l'actionneur de positionnement (18) du dispositif de positionnement (53) peut être commandé au moyen de la commande d'entraînement (64) de telle façon que pendant la durée d'au moins une phase d'usinage de l'usinage de la pièce, la distance entre la pièce (52) et le récepteur de rayon (12) puisse être maintenue à une valeur de distance constante par un positionnement mutuel correspondant du support de pièce (8) et du récepteur de rayon (12) le long de l'axe de rayon (14) du rayon laser (15).

10. Machine d'usinage au laser selon une des revendications précédentes, **caractérisée en ce que** la commande d'entraînement (64) de l'actionneur de positionnement (18) servant à régler la distance entre la pièce (52) et le récepteur de rayon (12) est formée au moins partiellement par une commande d'entraînement d'un actionneur de positionnement (72) servant à régler la distance mutuelle entre la tête d'usinage au laser (68) et la pièce (52).

11. Machine d'usinage au laser selon une des revendications précédentes, **caractérisée en ce que** la commande d'entraînement (64) de l'actionneur de positionnement (18) est réalisée sous la forme d'une commande numérique et que la distance entre la pièce (52) et le récepteur de rayon (12) peut être réglée au moyen de l'actionneur de positionnement (18) du dispositif de positionnement (53) à au moins une valeur de distance déterminée empiriquement qui est stockée dans une mémoire de la commande d'entraînement numérique (64) de l'actionneur de positionnement (18) du dispositif de positionnement (53).

12. Machine d'usinage au laser selon une des revendications précédentes, **caractérisée en ce qu'**un dispositif (70) de détermination d'une valeur de distance à régler pour la distance entre la pièce (52) et le récepteur de rayon (12) est prévu et que l'actionneur de positionnement (18) du dispositif de positionnement (53) peut être commandé au moyen de la commande d'entraînement (64) de telle façon que la distance entre la pièce (52) et le récepteur de rayon (12) soit réglable à cette valeur de distance au moyen de l'actionneur de positionnement (18).

13. Machine d'usinage au laser selon la revendication 12, **caractérisée en ce que** le dispositif (70) de détermination d'une valeur de distance à régler pour la distance entre la pièce (52) et le récepteur de rayon (12) est formé au moins partiellement par un dispositif (70) de détermination de la distance existante le long de l'axe de rayon (14) du rayon laser (15) entre la tête d'usinage au laser (68) et la pièce (52).

14. Machine d'usinage au laser selon une des revendications précédentes, **caractérisée en ce que** l'actionneur de positionnement (18) du dispositif de positionnement (53) servant au positionnement mutuel du support de pièce (8) et du récepteur de rayon (12) comprend un moteur d'actionneur de positionnement (19) au moyen duquel le support de pièce (8) peut être positionné par rapport au récepteur de rayon (12) si le récepteur de rayon (12) est fixe le long de l'axe de rayon (14) du rayon laser (15) ou au moyen duquel le récepteur de rayon (12) peut être positionné par rapport au support de pièce (8) le long de l'axe de rayon (14) du rayon laser (15) si le support de pièce (8) est fixe le long de l'axe de rayon (14) du rayon laser (15).

15. Machine d'usinage au laser selon une des revendications précédentes, **caractérisée en ce que** l'actionneur de positionnement (18) du dispositif de positionnement (53) servant au positionnement mutuel du support de pièce (8) et du récepteur de rayon (12) est formé par un actionneur de positionnement et d'évacuation au moyen duquel le support de pièce (8) et/ou le récepteur de rayon (12) peut être déplacé le long de l'axe de rayon (14) du rayon laser (15) pour évacuer les produits de l'usinage de la pièce.

16. Machine d'usinage au laser selon la revendication 15, **caractérisée en ce que** pour évacuer les produits de l'usinage de la pièce, le support de pièce (8) et le récepteur de rayon (12) sont déplaçables en commun le long de l'axe de rayon (14) du rayon laser (15) au moyen de l'actionneur de positionnement et d'évacuation et que pour le positionnement mutuel du support de pièce (8) et du récepteur de rayon (12), si le récepteur de rayon (12) est gêné dans son mouvement, en particulier bloqué, dans la direction de déplacement du support de pièce (8), le support de pièce (8) peut être positionné par rapport au récepteur de rayon (12) ou, si le support de pièce (8) est gêné dans son mouvement, en particulier bloqué, dans la direction de déplacement du récepteur de rayon (12), le récepteur de rayon (12) peut être positionné par rapport au support de pièce (8) le long de l'axe de rayon (14) du rayon laser (15).

17. Machine d'usinage au laser selon une des revendications précédentes, **caractérisée en ce qu'**une butée (37) active dans la direction du mouvement de positionnement est prévue pour le récepteur de rayon (12) ou le support de pièce (8) pour bloquer le récepteur de rayon (12) ou le support de pièce (8) lors du positionnement mutuel du support de pièce (8) et du récepteur de rayon (12).

18. Machine d'usinage au laser selon la revendication 17, **caractérisée en ce que** la butée (37) pour le récepteur de rayon (12) ou le support de pièce (8) est réglable dans différentes positions dans la direction du mouvement de positionnement mutuel du support de pièce (8) et du récepteur de rayon (12).

19. Procédé mécanisé d'usinage de pièces (52), en particulier de tôles, par pénétration d'une pièce à usiner (52) au moyen d'un rayon laser (15),
• dans lequel la pièce (52) est supportée par un support de pièce (8),
• dans lequel une tête d'usinage au laser (68) est disposée d'un côté et un récepteur de rayon (12) pourvu d'une ouverture de réception (13) du côté opposé, associé au support de pièce (8), de la pièce (52),
• dans lequel le rayon laser (15) venant de la tête d'usinage au laser (68) plonge dans l'ouverture de réception (13) du récepteur de rayon (12) après pénétration de la pièce (52) et
• dans lequel on fait varier au moyen d'un dispositif de positionnement (53) la distance existante entre la pièce (52) et le récepteur de rayon (12) du rayon laser (15) qui plonge dans le récepteur de rayon (12) le long de l'axe de rayon (14), le support de pièce (8) et le récepteur de rayon (12) étant positionnés l'un par rapport à l'autre par un mouvement de positionnement le long de l'axe de rayon (14) du rayon laser (15) au moyen d'un actionneur de positionnement (18), commandé par une commande d'entraînement (64), du dispositif de positionnement (53),
**caractérisé en ce que**
la distance entre la pièce (52) et le récepteur de rayon (12) est variable, la commande d'entraînement (64) commandant l'actionneur de positionnement (18) du dispositif de positionnement (53) de telle façon que l'actionneur de positionnement (18) positionne le support de pièce (8) et le récepteur de rayon (12) l'un par rapport à l'autre le long de l'axe de rayon (14) du rayon laser (15) par un mouvement de positionnement dont le montant peut être défini de manière variable.

20. Procédé mécanisé selon la revendication 19, **caractérisé en ce que** la distance entre la pièce (52) et le récepteur de rayon (12) est réglé à différentes valeurs de distance associées chacune à une phase d'usinage de l'usinage de la pièce, la commande d'entraînement (64) commandant l'actionneur de positionnement (18) du dispositif de positionnement (53) de telle façon que l'actionneur de positionnement (18) positionne le support de pièce (8) et le récepteur de rayon (12) l'un par rapport à l'autre le long de l'axe de rayon (14) du rayon laser (15) par un mouvement de positionnement d'un montant correspondant.

21. Procédé mécanisé selon la revendication 19 ou la revendication 20, **caractérisé en ce que** la distance entre la pièce (52) et le récepteur de rayon (12) est réglée à une valeur de distance associée au matériau de la pièce (52), la commande d'entraînement (64) commandant l'actionneur de positionnement (18) du dispositif de positionnement (53) de telle façon que l'actionneur de positionnement (18) positionne le support de pièce (8) et le récepteur de rayon (12) l'un par rapport à l'autre le long de l'axe de rayon (14) du rayon laser (15) par un mouvement de positionnement d'un montant correspondant.

22. Procédé mécanisé selon une des revendications 19 à 21, en particulier pour l'usinage de pièces (52) en forme de plaque, de préférence de tôles, **caractérisé en ce que** la distance entre la pièce (52) et le récepteur de rayon (12) est réglée à une valeur de distance associée à l'épaisseur de la pièce (52), la commande d'entraînement (64) commandant l'actionneur de positionnement (18) du dispositif de positionnement (53) de telle façon que l'actionneur de positionnement (18) positionne le support de pièce (8) et le récepteur de rayon (12) l'un par rapport à l'autre le long de l'axe de rayon (14) du rayon laser (15) par un mouvement de positionnement d'un montant correspondant.

23. Procédé mécanisé selon une des revendications 19 à 22, **caractérisé en ce que** pendant la durée d'au moins une phase d'usinage de l'usinage de la pièce, la distance entre la pièce (52) et le récepteur de rayon (12) est maintenue à une valeur de distance réglée constante, la commande d'entraînement (64) commandant l'actionneur de positionnement (18) du dispositif de positionnement (53) de telle façon que l'actionneur de positionnement (18) positionne le support de pièce (8) et le récepteur de rayon (12) l'un par rapport à l'autre le long de l'axe de rayon (14) du rayon laser (15) par un mouvement de positionnement d'un montant correspondant.

24. Procédé mécanisé selon une des revendications 19 à 23, **caractérisé en ce qu'**une commande d'entraînement numérique (64) est prévue comme commande d'entraînement (64), qu'une valeur de distance pour la distance entre la pièce (52) et le récepteur de rayon (12) est déterminée empiriquement et stockée dans une mémoire de la commande d'entraînement numérique (64) de l'actionneur de positionnement (18) du dispositif de positionnement (53) et que la distance entre la pièce (52) et le récepteur de rayon (12) est réglée à cette valeur de distance.

25. Procédé mécanisé selon une des revendications 19 à 24, **caractérisé en ce qu'**une valeur de distance à régler pour la distance entre la pièce (52) et le récepteur de rayon (12) est déterminée sur la pièce à usiner (52) et que la distance entre la pièce (52) et le récepteur de rayon (12) est réglée à cette valeur de distance.

26. Procédé mécanisé selon la revendication 25, en particulier pour l'usinage de pièces (52) en forme de plaque, de préférence de tôles, **caractérisé en ce qu'**une valeur de distance à régler pour la distance entre la pièce (52) et le récepteur de rayon (12) est déterminée sur la pièce à usiner (52) selon un procédé de détermination présentant les étapes suivantes :
• le support de pièce (8) et le récepteur de rayon (12) sont positionnés l'un par rapport à l'autre dans la direction de l'axe de rayon (14) du rayon laser (15) à une distance mutuelle ayant la valeur de distance nulle,
• la pièce (52) étant supportée par le support de pièce (8) et par le récepteur de rayon (12), le support de pièce (8) et le récepteur de rayon (12) sont positionnés l'un par rapport à l'autre dans la direction de l'axe de rayon (14) du rayon laser (15) en partant de la distance mutuelle ayant la valeur de distance nulle par éloignement du récepteur de rayon (12) de la pièce (52),
• pendant le positionnement mutuel du support de pièce (8) et du récepteur de rayon (12) par éloignement du récepteur de rayon (12) de la pièce (52), on détermine l'instant auquel la pièce (52) atteint sa flexion maximale au-dessus du récepteur de rayon (12),
• à partir de l'instant auquel la pièce (52) atteint sa flexion maximale au-dessus du récepteur de rayon (12), on détermine la valeur réelle de la distance mutuelle du support de pièce (8) et du récepteur de rayon (12),
• sur la base de la valeur réelle déterminée, on détermine la valeur de distance à régler pour la distance entre la pièce (52) et le récepteur de rayon (12).

27. Procédé mécanisé selon la revendication 26, **caractérisé en ce que** la flexion maximale de la pièce (52) au-dessus du récepteur de rayon (12) est déterminée sur la base de la distance existante le long de l'axe de rayon (14) du rayon laser (15) entre un niveau de référence et la pièce (52) au-dessus du récepteur de rayon (12).

28. Programme d'usinage pour faire fonctionner une machine d'usinage au laser (1) selon une des revendications 1 à 18, **caractérisé par** des instructions de commande pour l'actionneur de positionnement (18) du dispositif de positionnement (53) et/ou pour le dispositif (70) de détermination d'une valeur de distance à régler pour la distance entre la pièce (52) et le récepteur de rayon (12), lesquelles permettent de réaliser un procédé mécanisé selon une des revendications 19 à 27 quand le programme d'usinage est exécuté sur une commande numérique de la machine d'usinage au laser (1).

29. Procédé de création d'un programme d'usinage selon la revendication 28, **caractérisé en ce que** des instructions de commande pour l'actionneur de positionnement (18) du dispositif de positionnement (53) et/ou pour le dispositif (70) de détermination d'une valeur de distance à régler pour la distance entre la pièce (52) et le récepteur de rayon (12) sont générées, lesquelles permettent de réaliser un procédé mécanisé selon une des revendications 19 à 27 quand le programme d'usinage est exécuté sur une commande numérique de la machine d'usinage au laser (1).

30. Produit programme d'ordinateur, lequel présente des moyens de codage qui sont adaptés à l'exécution de toutes les étapes du procédé selon la revendication 29 quand le produit programme d'ordinateur est utilisé sur un système de traitement de données.
